(19) **Europäisches Patentamt / European Patent Office / Office européen des brevets**

(11) **EP 4 147 193 B1**

(12) **EUROPEAN PATENT SPECIFICATION**

(45) Date of publication and mention
of the grant of the patent:
**08.05.2024   Bulletin 2024/19**

(21) Application number: **20724096.1**

(22) Date of filing: **05.05.2020**

(51) International Patent Classification (IPC):
**G06T 3/40** *(2024.01)*          **H04N 23/951** *(2023.01)*
**H04N 13/00** *(2018.01)*

(52) Cooperative Patent Classification (CPC):
**G06T 3/4038; G06T 3/4053; H04N 23/951;**
G06T 2207/10032; H04N 13/128; H04N 2013/0081

(86) International application number:
**PCT/EP2020/062476**

(87) International publication number:
**WO 2021/223860 (11.11.2021 Gazette 2021/45)**

(54) **ACQUIRING A DIGITAL IMAGE OF AN IMAGE CONTENT**

ERFASSUNG EINES DIGITALEN BILDES EINES BILDINHALTS

ACQUISITION D'UNE IMAGE NUMÉRIQUE D'UN CONTENU D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.03.2023   Bulletin 2023/11**

(73) Proprietor: **Fraunhofer-Gesellschaft zur
Förderung
der angewandten Forschung e.V.
80686 München (DE)**

(72) Inventors:
• **BÄTZ, Michel**
  **91058 Erlangen (DE)**
• **JASCHKE, Tobias**
  **91058 Erlangen (DE)**
• **KEINERT, Joachim**
  **91058 Erlangen (DE)**
• **WOLF, Thorsten**
  **91058 Erlangen (DE)**
• **ZIEGLER, Matthias**
  **91058 Erlangen (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(56) References cited:
**WO-A1-2017/210987     US-A1- 2020 029 023**

**Description**

<u>Technical Field</u>

Embodiments of the present disclosure relate to an apparatus and a method for acquiring a digital image of an image content. In particular, some embodiments relate to a processing or rendering pipeline.

<u>Background</u>

In general, cameras and imaging sensors process a limited resolution. Spatial resolution enhancement of a given low-resolution imaging sensor is one way of an acquisition of a high-resolution image. In many applications, for instance in smartphones or automotive, it is not possible to integrate camera modules with arbitrarily high imaging resolution due to footprint and height restrictions, power limitations, or simply questions of costs. Nevertheless, there is a desire for ever increasing spatial resolutions in such devices to fulfill customer demands or algorithmic needs.

Common solutions use a given single low-resolution imaging sensor as input and apply so-called single-image super-resolution methods to increase the spatial resolution or fuse the images from multiple cameras into a high-resolution image. The first category covers methods ranging from simple interpolations to more sophisticated learning-based super-resolution approaches [1]. Simple interpolation techniques, however, suffer from the fact that they cannot recover missing high frequency information such as periodic structures and highly textured objects. On the other hand, learning-based approaches can only hallucinate high frequency information that might lead to visually appealing but physically incorrect image contents.

For the second category, multiple imaging sensors are used as input to create a high-resolution output. This category can be further subdivided into approaches based on multi-image super-resolution [1] where multiple low-resolution cameras act as input and approaches that fuse present high-resolution information from several imaging sensors together. Multi-image super-resolution approaches try to recover high frequency content from several, different low-resolution representations [2]. However, multi-image super-resolution approaches, often introduce artifacts from incorrectly matched correspondences or from too harsh regularization terms. Furthermore, resolution enhancement - in this case - only works properly if different low-resolution representations were captured; static, far away landscape scenes cannot benefit from such methods apart from a denoising.

The fusion of several, already present high-resolution images is another approach that does not face this issue. It relies on the idea to have multiple high-resolution imaging sensors that, for example, record only a portion or sub-field of view (FoV) of the scene each to mitigate hardware and/or cost restrictions [3], [4], [5]. In such a case, the sub-FoVs only have to be stitched together. Due to the different physical locations of the imaging sensors, however, the parallax between the input views has to be properly taken into account. This is a major source of visible artifacts when not done perfectly correct.

An alternative approach is to have a so-called mixed-resolution setup where multiple cameras with different spatial resolutions at different perspectives are used to enhance the resolution and thus sharpness of the present low-resolution cameras to the highest resolution available in the system [6]. Typical mixed-resolution setups consist of alternating low-resolution and high-resolution cameras with the goal to have all cameras in the given high resolution in the end.

WO 2017/210987 A1 describes to place high-resolution patches from a ring of high-resolution cameras onto a 360-degree low-resolution image by upscaling a low-resolution image to a high resolution and searching for correspondences of a query patch in search windows of homographic projections of the high-resolution images.

US 2020/029023 A1 describes a device for obtaining image information of a first and a second partial view and of a total field of view and for combining the image information of the first and second partial views with the image information of the total field of view to generate combined image information of the total field of view.

In view of these, there is a desire for an improved concept for acquiring high-resolution digital images based on low-resolution image data.

<u>Summary</u>

Accordingly, it is an objective of the present disclosure, to present a concept for acquiring a digital image, which provides an improved tradeoff between a high resolution and a low extent of image artifacts. This objective is achieved by the subject matter of the independent claims enclosed herewith.

Embodiments of the present disclosure rely on the idea, that a high-resolution digital image of an image content may be acquired from multiple images by overlaying a low-resolution base image comprising the entire image content, for example the entire field of view of a scene, with a plurality of partial images, each representing a portion of the image content, for example a partial field of view of the scene, the partial images having a higher spatial resolution than the base image. This way, the digital image of the image content may be acquired at a target resolution that is higher than the resolution of the base image. As the portions of the image content represented by the partial images may be smaller than the image content of the base image, the target resolution of the digital image may also be higher than the resolution of the partial images.

According to an aspect of the present disclosure, this finding is exploited for acquiring a digital image of an image content, e.g. a scene, is configured to obtain a base image of the image content, the base image having a base resolution. Acquiring the digital image comprises to obtain a plurality of partial images, each representing a respective portion of the image content and having a respective input resolution higher than the base resolution. Acquiring the digital image further comprises to up-sample the base image to a target resolution, which may also refer to a number of samples, so as to obtain an up-sampled base image; and, for each of the partial images, determine image content correspondences between the up-sampled base image and the respective partial image so as to obtain a disparity map associating positions within the up-sampled base image and corresponding positions within the respective partial image. The digital image at the target resolution is derived by overlaying the up-sampled base image with the partial images based on, for each partial image, the disparity maps determined for the respective partial image. Obtaining the base image may provide the entire image content within one image from one perspective and without visible artifacts which may arise from rendering or stitching, such as from occlusions or disocclusions. Thus, deriving the digital image based on the base image may avoid artifacts in the digital image and artifacts may be recognized. As the disparity maps associate each of the partial images with the base image which hence may be considered as one common reference for the partial images and which has the entire image content from one perspective, overlaying the partial images may be very precise and may cause particularly little artifacts.

Embodiments of the disclosure comprise an apparatus and a method for acquiring a digital image as defined above.

According to an embodiment, at least a first of the partial images represents a first portion of the image content, and at least a second of the partial images represents a second portion of the image content which is at least partially complementary to the first portion of the image content. A first portion may be considered to be at least partially complementary to a second portion, if the first portion comprises content that is not part of the second portion, the first portion may overlap second portion or not. In other words, the portions of the image content may be offset relative to each other, wherein they may overlap each other or not. As the partial images comprise at least partially complementary portions of the image content, the target resolution of the digital image may be higher than the input resolutions of the partial images. For example, the digital image may have the same sampling frequency or spatial resolution as the input images at a higher number of samples. Thus, a high target resolution may be achieved without the need for imaging the overall image content at the high target resolution on one single image sensor.

According to an embodiment, for each of the partial images, the portion of the image content represented by the respective partial image is complementary to at least one portion of the image content represented by another one of the partial images, and wherein the partial images together represent the overall image content. Thus, as the partial images may comprise high frequency information of the portions of the image content, high frequency information is available for the overall image content, although a spatial resolution of corresponding image sensors for the partial images is lower than the spatial resolution of the digital image. Thus, the high-resolution digital image may contain high frequency information, as provided by the partial images, in contrast to super-resolution methods using interpolation or hallucinated artificial high frequency information not necessarily being physically correct.

According to an embodiment, the apparatus is configured to derive the digital image at the target resolution by deriving, for each of samples of the digital image, wherein each sample of the digital image may correspond to one of the samples of the up-sampled base image, a digital image sample value based on a sample value of a corresponding up-sampled base image sample of the up-sampled base image (the corresponding up-sampled base image sample may correspond to the respective sample of the digital image, for example, a sample of the up-sampled base image, the position of which within the up-sampled base image corresponds to a position of the respective sample within the digital image), and one or more image values, each at one of one or more corresponding positions within the partial images, wherein each of the corresponding positions is within one of the partial images and is associated with the position of the corresponding up-sampled base image sample according to the disparity map determined for the one partial image, wherein an image value at a corresponding position within one of the partial images may be derived from one or more sample values of the one partial image located at the corresponding position of the one partial image. For example, the one or more sample values for deriving the image value may be located within a region around the corresponding position. On the one hand, as the up-sampled base image comprises the overall image content from one perspective within one image, deriving the digital image sample value based on the sample value of the corresponding up-sampled base image sample facilitates enhancing the physical correctness of the digital image, for example it allows for handling occlusions correctly. On the other hand, as the partial images have a higher resolution than the base image, deriving the digital image sample value based on the one or more image values allows for obtaining the digital image at the high-resolution. Thus, deriving the digital image sample value based on the sample value of the corresponding up-sampled base image sample and one or more image values may allow for achieving a physically correct high-resolution digital image.

According to an embodiment, the apparatus is configured to adapt contributions of the sample value of the corresponding up-sampled base image sample and the one or more image values to the digital image sample value of the respective sample based on one or more measures for a quality of the overlaying of the up-sampled base image with the partial images. For example, a measure for a quality of the overlaying may measure a confidence or a consistency of the obtained image content correspondences, or the positions associated by the disparity maps, for example by comparing associated positions regarding image characteristics. For example, in case that one of the one or more measures indicates a first value which is rated better quality than a second value, the contribution of the one or more image values may be set higher, relative to the contribution of the sample value of the corresponding up-sampled base image sample, than in case that the one measure indicates the second value. Increasing the contribution of the one or more image values may enhance a sharpness or a spatial resolution of the digital image. In case the overlaying of the base image with the partial images appears to cause artifacts, which may be recognized by the one or more measures, the contribution of the sample value of the corresponding up-sampled base image sample may be enhanced, so that artifacts caused by the overlaying may be avoided or attenuated. Thus, adapting the contributions may optimize a trade-off between having a rich high frequency information in the digital image on the one hand and avoiding visible artifacts or physically incorrect features on the other hand.

According to an embodiment, the apparatus is configured to adapt contributions of the corresponding up-sampled base image sample and the one or more image values to the digital image sample value of the respective sample based on one or more first measures for a matching of the up-sampled base image at the position of the corresponding up-sampled base image sample on the one hand, and the partial images, to which the one or more corresponding positions refer, at the respective corresponding position on the other hand. Thus, the one or more first measures may provide measures for the local matching of the up-sampled base image and the partial images at the respective positions to be overlaid according to the disparity maps, so that the contributions may be adapted individually for each of the digital image sample values. Thus, the trade-off between a rich high frequency information and little artifacts may be adapted locally, enhancing the overall quality of the digital image.

According to an embodiment, the apparatus is configured to derive the digital image at the target resolution by deriving a blended image, for example as an intermediate image or as the digital image. In some embodiments, the digital image may correspond to the blended image. The blended image is derived by determining, for each of samples of the blended image (e.g. each sample of the blended image may correspond to one of the samples of the up-sampled base image), a blended image sample value for the respective sample of the blended image based on a sample value of a corresponding up-sampled base image sample of the up-sampled base image (the corresponding up-sampled base image sample corresponding to the respective sample of the blended image, e.g. a sample of the up-sampled base image, the position of which within the up-sampled base image corresponds to a position of the respective sample within the blended image), and one or more image values, each at one of one or more corresponding positions within the partial images, wherein each of the corresponding positions is within one of the partial images and is associated with the position of the corresponding up-sampled base image sample according to the disparity map determined for the one partial image. For example, an image value at a corresponding position within one of the partial images may be based on one or more sample values of the one partial image located at the corresponding position or within a region around the corresponding position. Deriving the blended image and deriving the digital image from the blended image allows for analyzing the blended image, for example for artifacts, prior to deriving the digital image. As the blended image sample value is derived from the one or more corresponding positions and the corresponding up-sampled base image sample, analyzing the blended image may recognize artifacts from overlaying the up-sampled base image with the partial images.

According to an embodiment, the apparatus is configured to derive the digital image from the blended image by determining, for each of samples of the digital image (e.g. each sample of the digital image corresponding to one of the samples of the blended image, that is, there may be a correspondence between each one sample of the up-sampled base image, the blended image, and the digital image), a digital image sample value for the respective sample of the digital image based on the blended image sample value of a corresponding sample of the blended image of the respective sample (the corresponding sample of the blended image may correspond to the respective sample of the digital image. e.g. a sample of the blended image, the position of which within the blended image corresponds to a position of the respective sample within the digital image), and the sample value of the corresponding up-sampled base image sample of the corresponding sample of the blended image of the respective sample. On the one hand, as the blended image sample value is derived based on the sample value of the corresponding up-sampled base image sample and the one or more image values, it may rely on a rich high frequency information of the partial images. On the other hand, the sample value of the corresponding up-sampled base image sample is known to rely on a physically correct image, that is, it may be free of artifacts.

According to an embodiment, the apparatus is configured to adapt contributions of the sample value of the corresponding up-sampled base image sample and the blended image sample value of the corresponding sample of the blended image based on one or more second measures for a matching of the up-sampled base image at the position of the corresponding up-sampled base image sample on the one hand, and the blended image at the position of the corresponding sample of the blended image of the respective sample on the other hand. Thus, the one or more second measures may provide measures for the local matching of the up-sampled base image and the blended image at the respective positions after having blended the partial images. Thus, the contributions may be adapted individually for each of the digital image sample values and may correct for artifacts from the blending of the partial images and the up-sampled base image, for example due to an erroneous disparity map, or artifacts that remain after or occur from previous recalculations or corrections of the blended image or that remain after or occur from the blending of the blended image. Thus, the trade-off between a rich high frequency information from the partial images and avoidance of artifacts by using the up-sampled blended image may be adapted locally, enhancing the overall quality of the digital image.

According to an embodiment, the apparatus is configured to adjust the extent to which one of the one or more first measures or second measures is used to adapt the contributions to the digital image sample value based on a quality analysis of the digital image and/or based on characteristics of the base image and/or the partial images, e.g. by adapting a parameter, e.g. a threshold, e.g. a color threshold, a similarity threshold, or a disparity threshold. By adjusting the impact of the one or more first measures or second measures the process of overlaying the up-sampled base image with the partial images may be adapted so as to increase the quality of the derived digital image.

Further beneficial embodiments are defined by the dependent claims.

Brief description of the figures:

Advantageous implementations of the present disclosure are the subject of dependent claims and preferred embodiments are described in more detail below with respect to the figures, among which:

Fig. 1     illustrates an apparatus for acquiring a digital image according to an embodiment,

Fig. 2     illustrates image content correspondences according to an embodiment,

Fig. 3     illustrates an example of a determination of the blended or digital image,

Fig. 4     illustrates a recalculation of the blended image according to an embodiment,

Fig. 5     illustrates a recalculation of the blended image according to another embodiment,

Fig. 6     illustrates an overlaying adaption module according to an embodiment,

Fig. 7     illustrates an apparatus for acquiring a digital image according to another embodiment,

Fig. 8     illustrates an apparatus for acquiring a digital image according to another embodiment, and

Fig. 9     illustrates image correspondence determination according to an example.

Detailed description of illustrative embodiments

In the following, embodiments are discussed in detail, however, it should be appreciated that the embodiments provide many applicable concepts that can be variedly embodied in acquiring images and in digital image processing. The specific embodiments discussed are merely illustrative of specific ways to implement and use the present concept, and do not limit the scope of the embodiments. In the following description, a plurality of details is set forth to provide a more thorough explanation of embodiments of the disclosure. However, it will be apparent to one skilled in the art that other embodiments may be practiced without these specific details. In other instances, well-known structures and devices are shown in form of a block diagram rather than in detail in order to avoid obscuring examples described herein. In addition, features of the different embodiments described herein may be combined with each other, unless specifically noted otherwise.

In the following description of embodiments, the same or similar elements or elements that have the same functionality are provided with the same reference sign or are identified with the same name, and a repeated description of elements provided with the same reference number or being identified with the same name is typically omitted. Hence, descriptions provided for elements having the same or similar reference numbers or being identified with the same names are mutually exchangeable or may be applied to one another in the different embodiments.

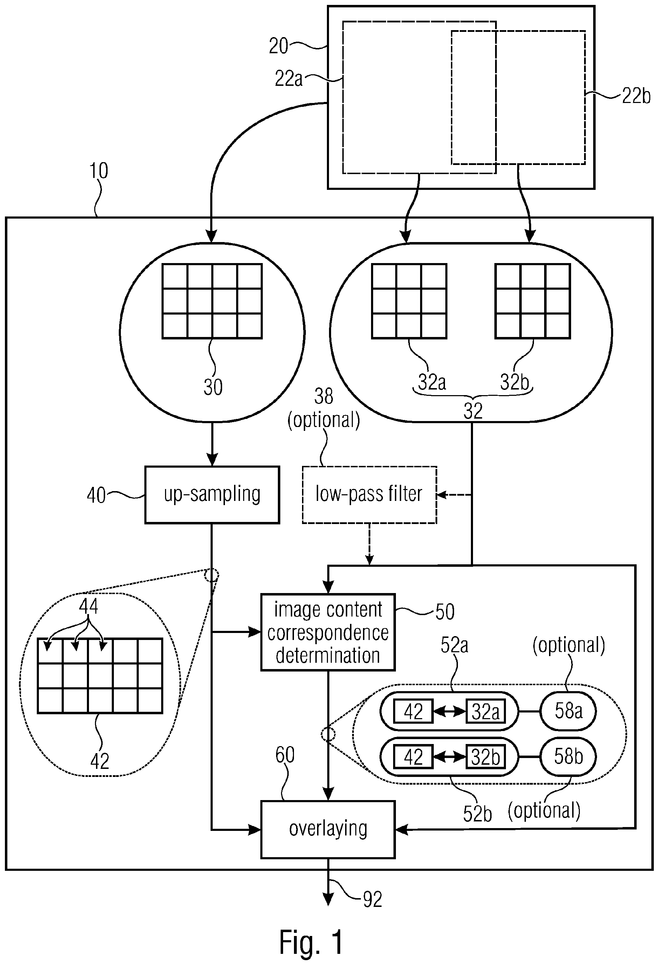

Fig. 1 shows an apparatus 10 for acquiring a digital image 92 of an image content 20 according to an embodiment.

The apparatus 10 is configured to obtain a base image 30 of the image content 20 and a plurality of partial images 32, each of the partial images 32a, 32b representing a respective portion 22a, 22b of the image content 20.

For example, the corresponding camera for obtaining the base image 30 and the partial images 32 may be part of the apparatus 10 or the apparatus 10 may receive the base image 30 and the partial images 32 from corresponding external cameras. That is, the obtaining of a respective image may comprise receiving or capturing the respective image and may further comprise additional processing, such as sampling, rectifying, color matching and correcting the respective image. For example, the respective image may be corrected according to known camera parameters.

In other words, the acquisition of the digital image may be based on a single low-resolution camera capturing the complete, desired field of view (FoV) and several adjacent satellite cameras recording only portions of the scene (sub-FoVs) in a high spatial resolution to enhance the visual quality and resolution of the target image. Since the satellite cameras may see only a portion of the full FoV each, the final computed output image can overall be of a higher spatial resolution than each input.

The base image comprises the overall image content 20 and has a base resolution. Each of the partial images 32a, 32b represents a respective portion 22a, 22b of the image content and having a respective input resolution.

The partial images 32a, 32b have a higher resolution than the base image. For example, the partial images 32a, 32b have a higher sampling frequency than the base image, e.g. the partial images 32a, 32b sample the image content with a higher sampling frequency. In other words, a higher resolution may imply that one sample of the respective image represents a lower solid angle, e.g. of the image content or field of view. The resolution may be independent from an absolute number of samples or pixels of the partial images or the base image, but may rather depend on a ratio between the absolute number of samples and a size of the portion of the image content of the respective image. Thus, the partial images 32 may have a higher spatial resolution than the base image and may comprise high frequency information of the image content (compared to a frequency spectrum of the base image).

The portions 22a, 22b represented by the partial images 32 may be arranged in a row, a grid or arbitrarily with respect to the image content 20. Preferably, the portions 22a, 22b are arranged overlapping, that is, two neighboring portions of the portions 22a, 22b may be arranged to overlap each other.

The apparatus 10 comprises an up-sampling module 40 configured to up-sample the base image 30 to a target resolution so as to obtain an up-sampled base image 42. The up-sampled base image 42 comprises a respective up-sampled base sample value for each of samples 44 of the up-sampled base image.

The apparatus 10 further comprises an content correspondence module 50 configured to, for each of the partial images 32a, 32b, determine image content correspondences between the up-sampled base image 42 and the respective partial image 32a, 32b, so as to obtain a disparity map 52a, 52b associating positions within the up-sampled base image 42 and corresponding positions within the respective partial image 32a, 32b, wherein a position within the respective partial image may point to an integer sample position or to a position between sample positions. Associating positions within the up-sampled base image with positions within the partial images may also be referred to as backward warping or texture fetching.

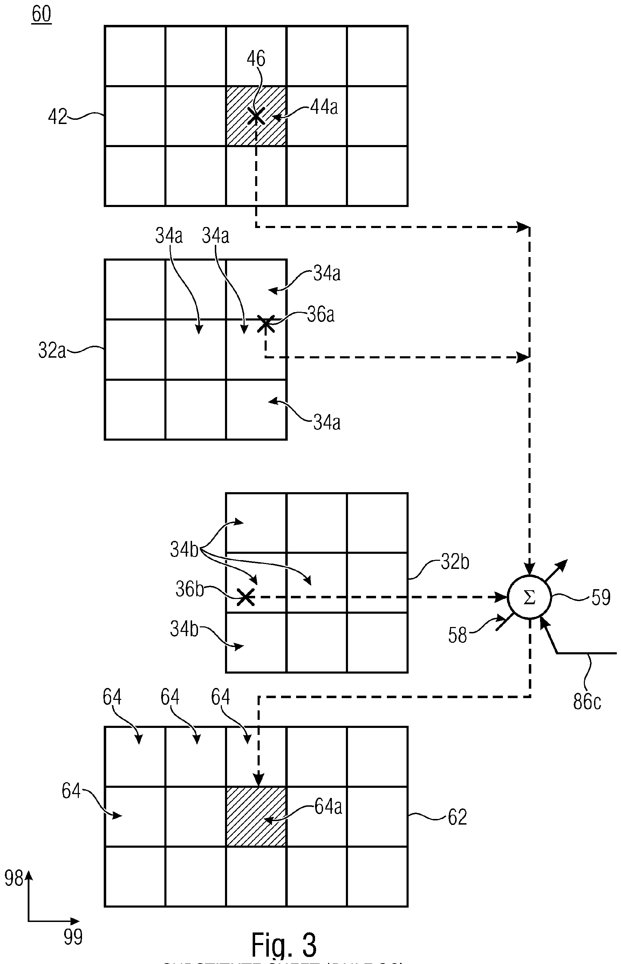

The apparatus 10 further comprises an overlaying module 60 configured to derive the digital image 92 at the target resolution by overlaying the up-sampled base image 42 with the partial images 32 based on, for each partial image 32a, 32b, the disparity maps 52a, 52b determined for the respective partial image. Further exemplary embodiments of the overlaying module 60 are also described with respect to Fig. 3 to Fig. 5.

A big advantage over conventional methods such as image stitching of overlapping FoVs is the presence and availability of a fallback image, e.g. the base image 30, which can be used in case of erroneous rendering or occluded or disoccluded objects. Even though, only low-resolution information is available in those cases, such image content is visually more appealing compared to missing or incorrect high-resolution information, i.e., image artifacts.

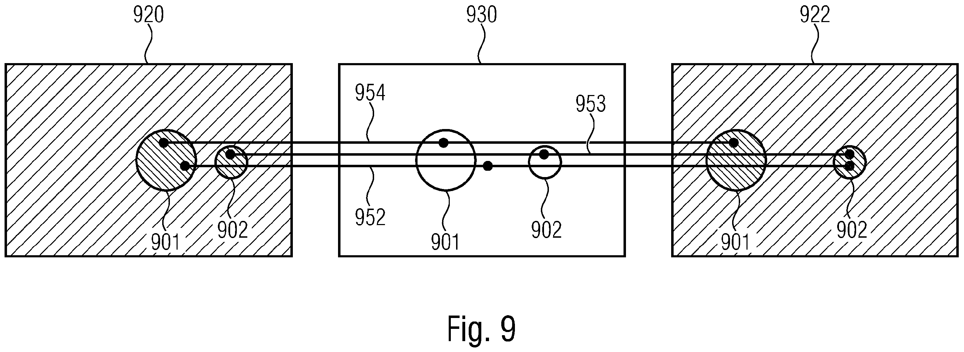

Another benefit arising from the presence of the fallback image is the possibility to perform view rendering in a pure backward warping manner, that is, e.g. the partial images may be rendered onto an existing image comprising the overall image content, namely the up-sampled base image 42. While image content information is not available for the whole target FoV in the conventional case with multiple high-resolution imaging sensors that capture only portions of the scene each, in the disclosed pipeline, at least a low-resolution representation 30 is available. This low-resolution representation allows for finding correspondences between the target camera position equaling to the camera position of the low-resolution image 30 and one source position, e.g. perspective of one of the partial images 32, each. For the conventional case, correspondences have to be established between given overlapping high-resolution views and subsequently have to be rendered to a novel target position. The backward warping approach massively reduces the number of rendering artifacts as estimated displacement maps do not have to be manipulated further to point towards the target position (cf. Fig. 9 and description thereof).

According to embodiments, the partial images 32 are complementary, that is the partial images 32 comprise at least a first partial image 32a representing a first portion 22a of the image content and a second partial image 32b representing a second portion 22b of the image content, wherein the first portion 22a is complementary to the second portion 22b, wherein the first portion 22a and the second portion 22b may overlap or not.

According to embodiments, for each of the partial images 32, the portion of the image content represented by the respective partial image is complementary to at least one portion of the image content represented by another one of the partial images 32, and the partial images 32 together represent the overall image content 20. For example, the portions of the image content represented by the partial images 32 may be smaller than the overall image content. Thus, even in a case in which a number of samples of the partial images 32 equals a number of samples of the base image 30, the digital image may have higher frequency information than the base image 30. All of the portions of the image content may be complementary to each other, or one or more of the portions of the image content may be equal, but complementary to at least one other portion of the portions of the image content.

According to embodiments, the apparatus 10 may low-pass filter 38 each of the partial images to obtain a respective filtered partial image, so that a frequency spectrum, for example a modulation transfer function, of the respective filtered partial image is adapted to a frequency spectrum, for example a modulation transfer function, of the up-sampled base image 42. The content correspondence determination module 50 may subsequently determine the image content correspondences based on the filtered partial images. As the filtered partial images may have approximately the same sampling frequency as the up-sampled base image 42, image content correspondences may be found more reliably.

For example, the low-pass filtering of the partial images 32 may be performed by down-sampling each of the partial image 32a, 32b to the base resolution to obtain a respective down-sampled partial image, and subsequently up-sampling the down-sampled partial image to the input resolution of the respective partial image to obtain the respective filtered partial image. Down-sampling the respective partial image to the base resolution may refer to down-sampling the respective partial image so that a sampling frequency of the down-sampled image is adapted to a sampling frequency of the base image. For example, a number of samples of the respective down-sampled partial image equals a number of samples of a portion of the base image representing the corresponding portion of the image content of the respective partial image. For example, down-sampling the partial images 32a, 32b may be performed similar or equivalently to a sampling of the base image, as may be done for obtaining the base image, e.g. by the corresponding camera. Preferably, up-sampling the down-sampled partial image is performed by using the same filter as for up-sampling the base image 30 to the up-sampled base image 42. This choice of the up-sampling filter and/or down-sampling filter ensures a high similarity of the frequency spectra of the up-sampled base image 42 and the filtered partial images.

Low-pass filtering the partial images by down-sampling and up-sampling has the advantage, that after finding correspondences between the up-sampled base image 42 and the respective partial image 32a, 32b, the found correspondences do not need to be up-sampled to the target resolution and the disparity maps 52a, 52b do not need to be interpolated, so that a loss of accuracy at edges, and hence undesired artifacts, may be avoided.

For each of the partial images 32, optionally based on the filtered partial images, image content correspondences between the up-sampled base image 42 and the respective partial image 32a, 32b are determined and described by the respective disparity map 52a, 52b, for example in form of displacement vectors, for example by a pixel offset in both X and Y directions of images, wherein the X and Y directions may refer to rows and columns of the images.

According to embodiments, the apparatus 10 may obtain, for example together with the disparity map 52a, 52b, for each of the association between a position within the up-sampled base image 42 and a corresponding position within the respective partial image 32a, 32b a measure 58a, 58b for dissimilarity or similarity, for example a matching cost, between the up-sampled base image 42 at the respective position indicated by the association and the respective partial image at the respective corresponding position indicated by the association. The measure for dissimilarity or similarity may be based on a region around the respective position within the up-sampled base image 42 and a region around the respective corresponding position within the respective partial image. For example, the measure for dissimilarity or similarity may be based on color values, structure information and/or further image characteristics. The measure 58a, 58b for dissimilarity or similarity may be an example of one or more first measures 58.

In general, throughout this document, color may refer to a sample value or pixel value of any color space and may also refer to grey scale color spaces.

The image content correspondence module 50 may perform disparity estimations for finding the image content correspondences and the disparity maps 52a, 52b. For example, an optical flow-based approach or a block-based approach may be used. The disparity estimations may be performed in one direction, for example from the up-sampled base image 42 to the respective partial image 32a, 32b, or may be performed in both directions between the two respective images.

For example, the determination of the image content correspondences for the respective partial image 32a, 32b may be performed based on a portion of the up-sampled base image 42 which represents the portion 22a, 22b of the image content represented by the respective partial image 32a, 32b. For example, the portion of the up-sampled base image 42 to be used in correspondence to the respective partial image 32a, 32b may be selected based on known camera parameters.

For determining the disparity maps, the availability of the base image 30 and the usage of the backward warping enable the straightforward estimation and application of two-dimensional disparity vectors, i.e., estimating pixel offsets in X and Y direction. To simplify the correspondence search, the input images may be rectified beforehand (in a non-planar camera setup, this rectification may happen only pairwise and on the fly) so that only a pixel offset in one dimension needs to be found. View rendering between two horizontally shifted cameras thus only requires the scaling of the one-dimensional disparity vector. However, the rectification process may be imperfect making it impossible for the restricted one-dimensional correspondence search to find the correct match. Therefore, the two-dimensional disparity vectors, also referred to as flow field, offer more flexibility, can better counter an incorrect rectification or remaining undesired parallax. As an alternative to pairwise disparity estimations between the up-sampled base image 42 and each one of the partial images, that is determining pairwise stereo correspondences, multi-view correspondences may be determined between a plurality of the partial images 32.

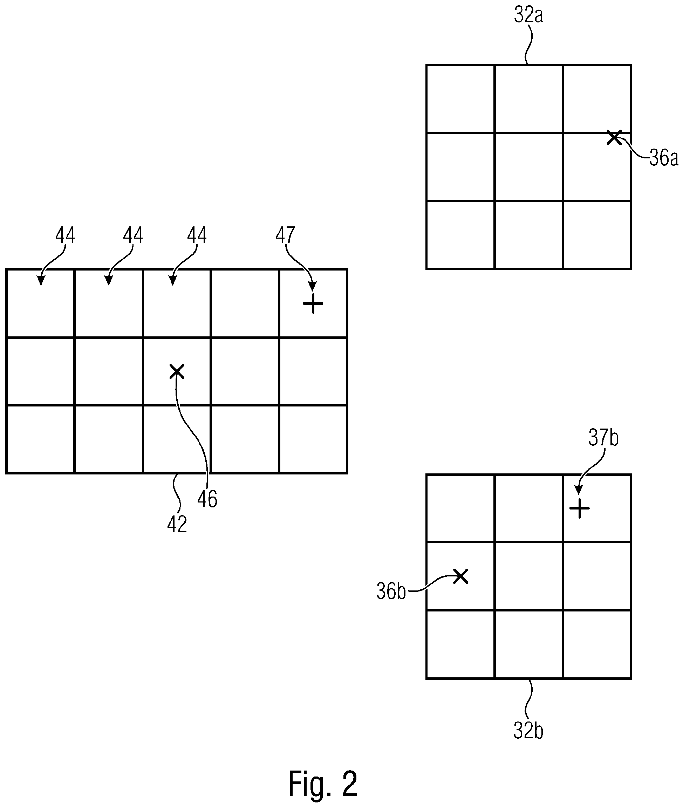

Fig. 2 illustrates image content correspondences between the up-sampled base image 42 and the partial images 32a, 32b according to an embodiment. For example, the up-sampled base image 42 comprises positions 46, 47. A position of the up-sampled base image 42 may be associated with one or more corresponding positions, wherein each of the one or more corresponding positions may refer to a different one of the partial images 32. For example, the position 46 of the up-sampled base image 42 may be associated with the corresponding position 36a of the partial image 32a and with the corresponding position 36b of the partial image 32b. In other words, the partial images 32a, 32b may overlap at the position 46 of the up-sampled base image 42. In contrast, the position 47 of the up-sampled base image 42 may be associated with only one corresponding position, namely the corresponding position 37b of the partial image 32b. It is noted that the association between the position of the up-sampled base image 42 and the corresponding position of the respective partial image 32a, 32b may be understood bidirectional.

Fig. 3 illustrates an example of a working principle of the overlaying module 60 according to an embodiment. The overlaying module 60 may derive the digital image 92 at the target resolution by deriving a blended image 62 from the up-sampled base image 42 and the partial images 32. In some embodiments, the blended image 62 may correspond to the digital image 92. In other embodiments, the blended image 62 may be further processed for obtaining the digital image 92. Thus, the description for deriving the blended image 62 and samples 64 of the blended image 62 may be equally applied for deriving the digital image 92, and samples of the digital image 92, respectively.

Each of the samples 64 of the blended image 62 may correspond to a corresponding up-sampled base image sample of the samples 44 of the base image 42. For example, the corresponding up-sampled base image sample 44a may correspond to the respective sample 64a of the blended image. For example, a position, e.g. a X-Y-coordinate, of the corresponding up-sampled base image sample 44a within the up-sampled base image 42 may correspond to a position, e.g. a X-Y-coordinate, of the respective sample 64a of the blended image 62 within the blended image 62. For example, the X-Y-coordinate refers to a first direction 99, e.g. a X-direction, and a second direction 98, e.g. a Y-direction within the respective images. Equally, each sample of the digital image 92 may correspond to a corresponding up-sampled base image sample and a corresponding sample of the blended image 62.

The overlaying module 60 may derive, for each of the samples 64 of the blended image 62, a blended image sample value. The blended image sample value of the respective sample 64a of the blended image 62 may be derived based on the sample value of the corresponding up-sampled base image sample 44a, and on one or more image values, each at one of one or more corresponding positions 36a, 36b within the partial images 32a, 32b, wherein each of the corresponding positions 36a, 36b is associated with the position of the corresponding up-sampled base image sample 44a. That is, for each of the corresponding positions 36a, 36b associated with the corresponding up-sampled base image sample 44a according to the disparity maps for the partial images 32, a respective image value is determined based on the respective corresponding position 36a, 36b. The number of the one or more image values available for the respective sample of the blended image may correspond to the number of corresponding positions associated with the position of the corresponding up-sampled base image sample of the respective position.

For example, the image value for the corresponding position 36a within the partial image 32a may be determined based on sample values 34a of the partial image 32a within a region around the corresponding position 36a, for example based on a weighted average or an interpolation method, e.g. a nearest neighbor, a bilinear, a bicubic or higher order interpolation method.

According to embodiments, the apparatus 10 may obtain one or more first measures 58 for a matching of the up-sampled base image 42 at the position of the corresponding up-sampled base image sample 44a on the one hand, and the partial images 32a, 32b, to which the one or more corresponding positions 36a, 36b refer, at the respective corresponding position 36a, 36b on the other hand. For example, the one or more first measures 58 comprise one of a color difference or the measure 58a, 58b for dissimilarity or similarity. For example, the apparatus 10 may obtain, for each of the one or more corresponding positions 36a, 36b, a color difference between the sample value of the corresponding up-sampled base image sample 44a and the image value obtained for the respective corresponding position. The apparatus 10 may adapt contributions of the sample value of the corresponding up-sampled base image sample 44a and the one or more image values to the blended image sample value of the respective position 64a based on the one or more first measures 58a obtained for the corresponding up-sampled base image sample 44a of the respective sample 64a.

For example, the apparatus 10 may adapt the contributions of the sample value of the corresponding up-sampled base image sample 44a and the one or more image values to the blended image sample value of the respective position 64a by determining the blended image sample value of the respective position 64a based on a first weighted sum 59 of the sample value of the corresponding up-sampled base image sample 44a and the one or more image values at corresponding positions 36a, 36b within the partial images 32a, 32b. For example, the apparatus 10 may set weights of the first weighted sum 59 based on the one or more first measures.

According to embodiments, the apparatus 10 may adjust the contributions, for example the weights for the first weighted sum 59, by checking one of the first measures for the respective position 64a against a predetermined criterion 86c, for example a predetermined threshold, for the one first measure 58. For example, the apparatus 10 may set a weight of the first weighted sum 59 for the image value of the corresponding position 36a to zero, if the measure 58a for dissimilarity or similarity indicates that a similarity between the up-sampled base image 42 at the corresponding up-sampled base image sample 44a and the partial image 32a at the corresponding position 36a is below a predetermined similarity threshold.

According to embodiments, the apparatus 10 may use the sample value of the corresponding up-sampled base image sample 44a as the blended image sample value of the respective position 64a, if for all of the corresponding positions 36a, 36b, one of the first measures, for example the measure for dissimilarity or similarity, does not fulfill the predetermined criterion, or else determine the blended image sample value of the respective position 64a based on those of the one or more image values that fulfill the predetermined criterion. For example, the apparatus 10 may set a weight of the first weighted sum 59 for the sample value of the corresponding up-sampled base image sample 44a to non-zero, for example set a relative weight to one, if for each of the one or more corresponding positions within the partial images, the weight is zero, or else may set the weight for the sample value of the corresponding up-sampled base image sample 44a to zero.

The blended image 62 derived as described above, may correspond to the digital image 92. Alternatively, the apparatus 10 may recalculate the samples 64 of the blended image 62 so as to derive samples of the digital image 92, wherein each of the samples 64 may correspond to one sample of the digital image 92. The recalculated samples may be stored in the blended image 62 or may be stored in a new image.

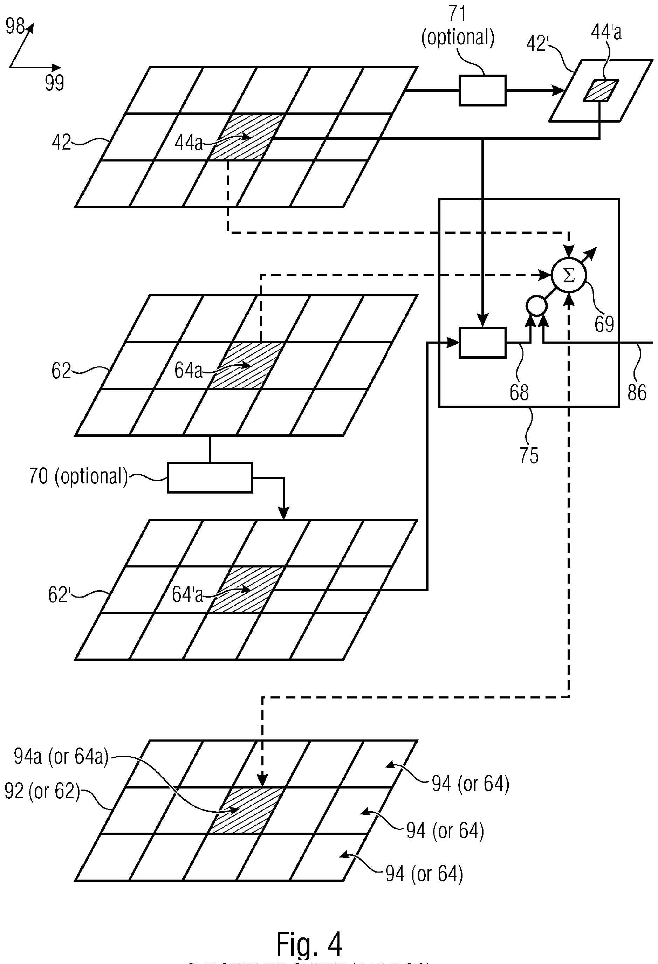

For example, the apparatus 10 may evaluate the blended image 62, for example for artifacts or for a validity or consistency of the blended image sample values of the samples 64, by comparing the blended image 62 to the up-sampled base image 42, for example to obtain one or more second measures 68 (cf. Fig. 4). In dependence on an outcome of the evaluation, or in dependence on the one or more second measures 68, the apparatus 10 may recalculate one or more blended image sample values so as to derive the digital image. The apparatus 10 may perform one or more recalculations of one or more blended image sample values of samples 64 of the blended image 62. For example, each of the recalculations may be performed based on the blended image 62 as originally derived or as recalculated by a previous recalculation of the one or more recalculations. Each of the recalculations may rely on an outcome of a respective evaluation, wherein the respective evaluation is performed on the blended image 62 as originally determined or as recalculated by a previous recalculation of the one or more recalculations.

The determination of the blended image 62 by means of setting the contributions from the up-sampled base image 42 and the partial images 32, and the one or more recalculations of the blended image 62, may be referred to as each one fallback switches, or, together as a multi-layer fallback switch, as both processes may use the up-sampled base image 42 for correcting erroneous matching of the partial images and the up-sampled base image. For example, the multi-layer fallback switch mechanism may comprise a cost (similarity), color, and self-disparity thresholding step. This multi-layer fallback switch ensures that rendering artifacts are successfully suppressed, while high frequency information is incorporated into the final output image where possible.

Fig. 4 illustrates an example for deriving the digital image 92 from the blended image 62 according to an embodiment. For deriving of the digital image 92 from the blended image 62, the blended image 62 may be recalculated one or several times, for example by a recalculation module 75. The recalculation modules 75, which may be part of the overlaying module 60, may derive the digital image 92, or a recalculation of the blended image 62, from the blended image 62 by determining, for each of samples 94 of the digital image, a digital image sample value for the respective sample 94a of the digital image based on the blended image sample value of a corresponding sample 64a of the blended image 62 of the respective sample 94a and the sample value of the corresponding up-sampled base image sample 44a of the corresponding sample 64a of the blended image 62 of the respective sample 94a. Thus, the apparatus 10 may derive the respective sample 94a of the digital image 94 by recalculating, one or more times, the blended image sample value of the corresponding sample 64a of the blended image 62.

According to embodiments, for recalculating the blended image sample value of the respective sample 64a of the blended image 62, apparatus 10 may obtain one or more second measures 68 for a matching of the up-sampled base image 42 at the position of the corresponding up-sampled base image sample 44a on the one hand, and the blended image 62 at the position of the respective sample 64a of the blended image 62 on the other hand.

According to embodiments, the apparatus 10 may determine the one or more second measures 68 for the matching of the up-sampled base image 42 and the blended image 62 by comparing the up-sampled base image 42 to a converted blended image 62'.

According to embodiments, for obtaining the converted blended image 62', a conversion module 70 may compute a filtered blended image by applying a low-pass filter to the blended image 62 so that a frequency spectrum of the filtered blended image is adapted to a frequency spectrum of the up-sampled base image 42.

For example, the low-pass filter may down-sample the blended image 62 to the base resolution to obtain a down-sampled blended image and subsequently up-sample the down-sampled blended image to the target resolution so as to obtain the filtered blended image. The down- and up-sampling filters may be chosen accordingly to the same considerations as described with respect to the low-pass filtering of the partial images 32.

The converted blended image 62' comprises sample values 64' which may include the sample value 64'a corresponding to the sample value 64a of the blended image 62. The converted blended image 62' may correspond to the filtered blended image. Alternatively, further filtering or transforming of the filtered blended image may be applied to derive the converted blended image 62'.

For example, the one or more second measures 68 comprise one of a color difference or a measure for dissimilarity or similarity, for example the measure for dissimilarity or similarity as described above. For example, the up-sampled base image 42 at the position of the corresponding up-sampled base image sample 44a may refer to the sample value of the corresponding up-sampled base image sample 44a and/or to sample values of the up-sampled base image 42 within a region around the corresponding up-sampled base image sample 44a. Accordingly, the blended image 62 at the position of the respective sample 64a may refer to the sample value of the corresponding sample 64'a of the converted blended image 62' of the respective sample 64a and/or to sample values within a region around the corresponding sample 64'a.

For example, the one or more second measures may comprise a measure for dissimilarity or similarity. For example, the measure for dissimilarity or similarity may be obtained based on disparity estimations between the up-sampled base image 42 and the converted blended image 62', with similar methods as described above with respect to the one or more first measures.

For example, the one or more second measures 68 for recalculating the respective sample 64a may comprise a color difference between the sample value of the corresponding up-sampled base image sample 44a and the sample value of the corresponding sample 64'a of the converted blended image 62'.

The recalculation module 75 may adapt contributions of the sample value of the corresponding up-sampled base image sample 44a and the blended image sample value of the corresponding sample 64a of the blended image 62 based on one or more second measures 68.

For example, the recalculation module 75 may recalculate, for each sample 64 of the blended image, the blended image sample value based on a weighted sum 69 of the blended image sample value of the respective sample 64a and the sample value of the corresponding up-sampled base image sample 44a of the respective sample 64a. The recalculation module 75 may adjust, for each sample 64 of the blended image, weights of the weighted sum 69 for the blended image sample value of the respective sample 64a and the sample value of the corresponding up-sampled base image sample 44a of the respective sample 64a based on the one or more of the second measures 68 derived for the respective sample 64a.

According to an embodiment, in a first type of recalculation of the blended image 62, the weights for the weighted sum 69 depend on a color difference between the blended image 62 at the respective sample 64a of the blended image 62 and the up-sampled base image 42 at the corresponding up-sampled base image sample 44a of the respective sample 64a. In this case, the weighted sum 69 may be referred to as a second weighted sum.

For the first type of recalculation, the conversion module 70 may optionally apply a color transformation to the blended image 62 or to the filtered blended image so as to derive a transformed blended image, which may be provided as the converted blended image 62'. For example, the color transformation may transform a color space of the blended image 62 or the filtered blended image, for example from a RGB color space into a Lab color space. Accordingly, for the first type of recalculation, the apparatus 10 may further apply a color transformation 71, which may correspond to the color transformation applied to the blended image 62 or to the filtered blended image, to the up-sampled base image 42 so as to obtain a transformed up-sampled base image 42', and may derive the color difference for the second measures 68, for the respective sample 64a, based on the corresponding sample 44'a of the transformed up-sampled base image 42' and the corresponding sample 64'a of the converted blended image 62'.

According to an embodiment, in a second type of recalculation of the blended image 62, the weights for the weighted sum 69 depend on a disparity value 68b, which may be an example of the second measures 68, indicating a dissimilarity or similarity between the blended image 62' at a position of the respective sample 64'a of the blended image 62' and the up-sampled base image 42 at a position of the corresponding up-sampled base image sample 44a of the respective sample 64a. For example, the disparity value 68b may be derived by disparity estimations, similar as described with respect to the content correspondences determination module 50. For example, the disparity value 68b may indicate a displacement vector for a position of within the blended image 62' and a corresponding position within the up-sampled base image 42. For example, a low displacement vector determined for the position of the respective sample 64a may indicate a high fidelity of the blended image sample value of the respective sample 64a In this second type of recalculation, the weighted sum 69 may be referred to as a third weighted sum.

According to embodiments, the apparatus 10 may adjust the contributions of the sample value of the corresponding up-sampled base image sample 44a and the blended image sample value of the corresponding sample 64a of the blended image 62, for example the weights for the second or third weighted sum 69, by checking one of the second measures for the respective sample 64a against a predetermined criterion, for example a predetermined threshold, for the one second measure.

For example, referring to the first type of recalculation, the apparatus 10 may set a weight of the second weighted sum 69 for the sample value of the corresponding up-sampled base image sample 44a to zero, if the color difference derived from the sample value of the corresponding up-sampled base image sample 44a (or 44'a) and the sample value of the corresponding sample 64'a of the respective sample 64'a is below a predetermined color threshold.

For example, referring to the second type of recalculation, the apparatus 10 may set a weight of the third weighted sum 69 for the sample value of the corresponding up-sampled base image sample 44a to zero, if the measure for dissimilarity or similarity indicates that a similarity between the up-sampled base image 42 at the corresponding up-sampled base image sample 44a and the converted blended image 62' at the position of the respective sample 64'a is above a predetermined disparity threshold. For example, a low disparity value may indicate a high similarity, so that the weight of the third weighted sum 69 for the sample value of the corresponding up-sampled base image sample 44a may be set to zero, if the corresponding disparity value is below a predetermined disparity threshold.

According to an embodiment, the overlaying module 60 may recalculate the blended image 62 by means of the first and/or the second type of recalculation and optionally further types of recalculation, which may be based on further of the second measures, in arbitrary order. In a preferred embodiment, the apparatus 10 may recalculate the blended image 62 using the first type of recalculation and subsequently recalculates the blended image 62, as obtained by the first type of recalculation, using the second type of recalculation so as to obtain the digital image 92.

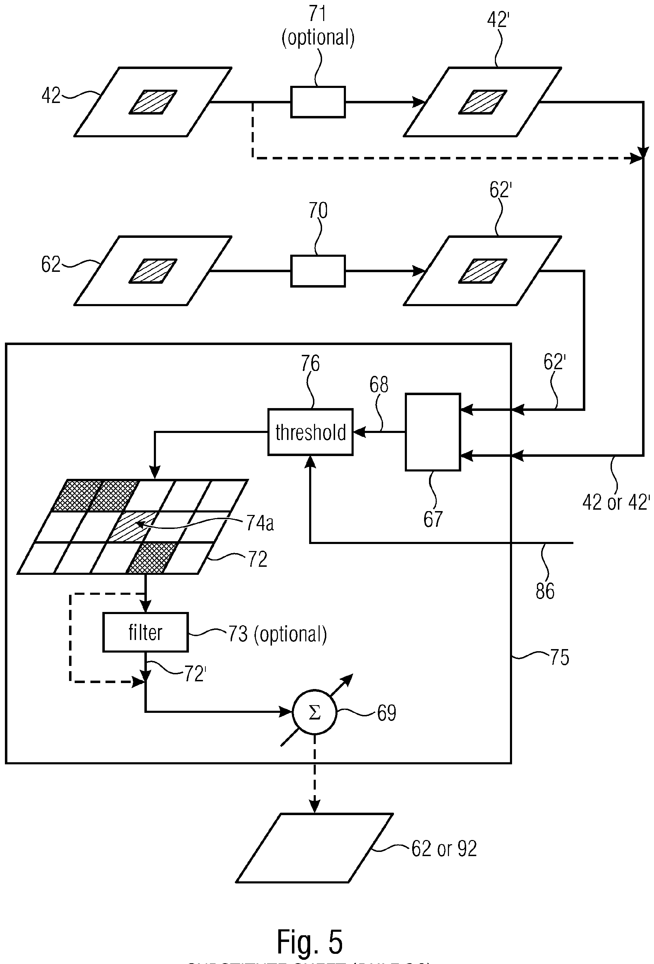

Fig. 5 illustrates an example of the recalculation module 75 for recalculating the blended image 62 based on one of the second measures 68. The recalculation module 75 comprises a thresholding module 76 configured to determine, for each of the samples 64 of the blended image 62, a corresponding decision value 74a for a decision map 72, wherein the decision value indicates, whether the one second measure 68, as determined for the respective sample 64a, is above or below a predetermined threshold 86 for the one second measure 68. For example, the decision values of the decision map 72 may be binary. Optionally, the recalculation module 75 may low-pass filter the decision map 72 to obtain a filtered decision map 72', for example by using a Gaussian filter. Filtering the decision map 72 may account for a smooth transition between regions of sample values of the blended image 62 or digital image 92, for which either the sample values of the up-sampled base image 42 or the blended image sample values dominate or make up the respective region of sample values.

The recalculation module 75 may obtain the weights for the weighted sum 69 for the respective sample 64a from the corresponding decision value of the decision map 72 or the filtered decision map 72'. For example, the recalculation module may derive one decision map 72 for each of the recalculations of the blended image 62.

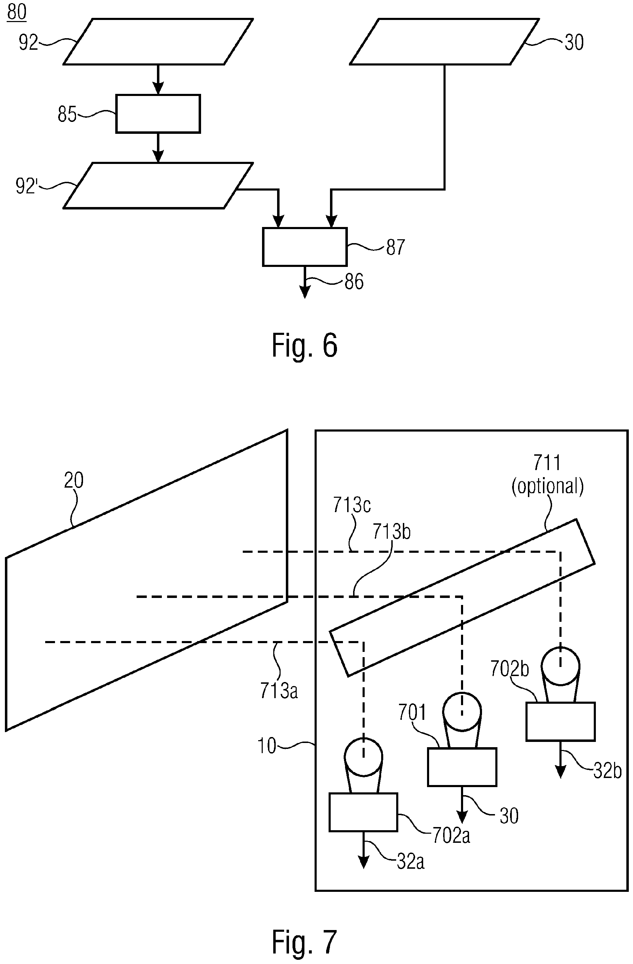

Fig. 6 illustrates an example of an overlaying adaption module 80. The overlaying adaption module 80 may provide, for one or more of the first or the second measures, the criterion 86 for adjusting the contributions to the blended image or to the digital image according to the respective measure. The overlaying adaption module 80 may obtain the respective criterion 86 based on a quality measurement 87. The quality measurement 87 may determine a quality measure, for example a signal-to-noise ratio, of the digital image 92, by comparing the digital image 92 to the base image 30. For better compatibility between the digital image 92 and the base image 30, the overlaying adaption module 80 may down-sample the digital image 92 to the base resolution by means of a down-sampling filter 85, to obtain a down-sampled digital image 92' and perform the quality measurement 87 based on the down-sampled digital image 92' and the base image 30. Based on the quality measure, the overlaying adaption module 80 may provide the criterion 86, 86a, 86b, 86c for the respective measure.

For example, the criterion 86 may comprise one or more of the predetermined similarity threshold 86c, the predetermined color threshold 86a, and the predetermined disparity threshold 86b.

According to an embodiment, the apparatus 10 may iteratively adjust one or more of the one or more criteria 86. For example, the apparatus 10 may acquire the digital image 92 based on a default value for the one or more criteria 86. The default value may, for example be determined from characteristics of the base image and/or the partial images. Subsequently, the overlaying adaption module 80 may determine the quality measure for the digital image 92 and adjust one or more of the one or more criteria 86. Subsequently, the apparatus 10 may recalculate the digital image 92, for example, starting with determining the blended image 62 from the up-sampled base image 42 and the partial images 32a, 32b. The iterative adjustment of the one or more criteria 86 may adjust the one or more criteria 86 one after another, alternatingly, or simultaneously. The iterative adjustment of one of the one or more criteria 86 may be stopped, if the quality measure indicates a quality of the digital image 92 rated better than a predefined quality for the one criteria 86, or if a maximum number of iteration steps is reached.

According to an embodiment, the overlaying adaption module 80 or the threshold determination may be avoided.

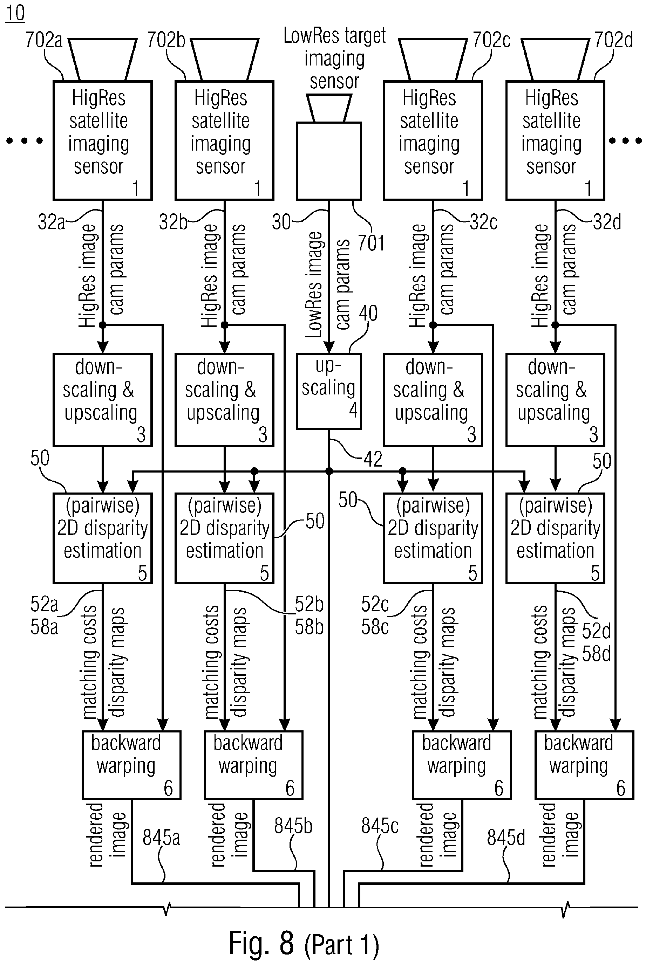

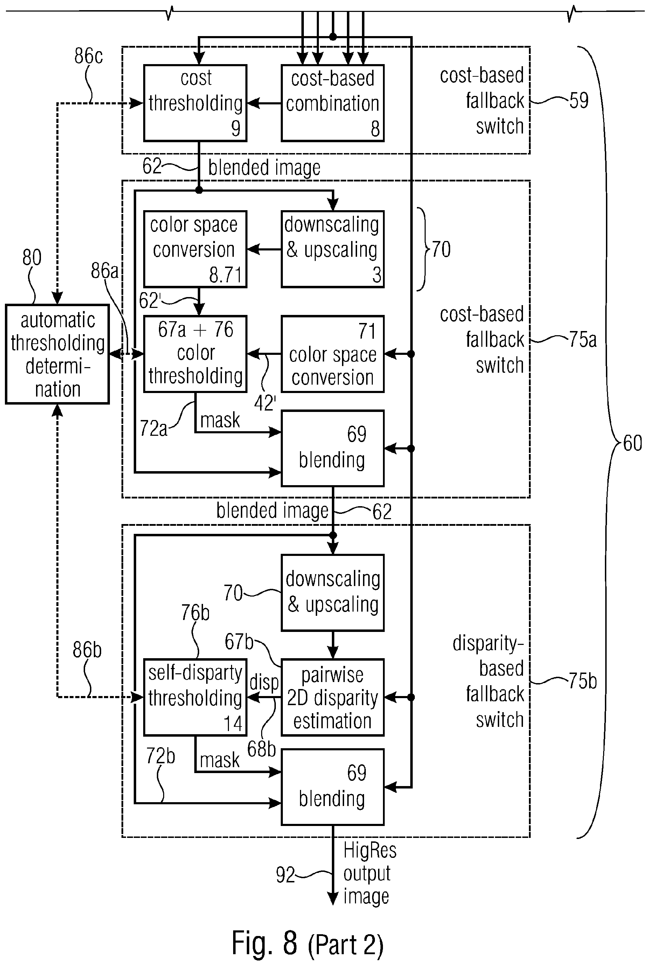

The overlaying adaption module 80, which may be referred to as automatic threshold determination block (cf. Fig. 8) offers the advantage of a better adaptation to the current scene and its requirements by optimizing the thresholds on the fly.

Fig. 7 illustrates another embodiment of the apparatus 10 comprising a low-resolution camera (or imaging sensor) 701 for obtaining the base image 20 and a plurality of high-resolution cameras (or imaging sensors) 702, including the high-resolution cameras 702a, 702b, for obtaining the plurality of partial images 32. The high-resolution cameras 702 have a higher spatial resolution than the low-resolution camera 701. A beam path 713a-c image the image content 20 or more of the portions 22 of the image content on the low-resolution camera 701 or one of the high-resolution cameras 702, respectively.

The low-resolution camera 701 and the plurality of high-resolution cameras 702 may be arranged side by side in a row. Optionally, the apparatus 10 may comprise a beam deflecting device 711 for deflecting beam paths 713a-c, for example jointly. In other examples the cameras 701, 702 may be oriented directly towards the image content 20. The low-resolution camera 701 may be arranged centered with respect to the high-resolution cameras 702, or may be arranged otherwise.

According to one embodiment, the apparatus 10 comprises two high-resolution cameras 702.

According to another embodiment, the apparatus 10 comprises four high-resolution cameras 702, which may form to pairs of high-resolution cameras, wherein the high-resolution cameras of one of the pairs may both image a first the portion of the image content, which is complementary to a second portion of the image content, which may be imaged by the high-resolution cameras of the second pair. Thus, the portions of the image content are available from two perspectives, allowing for correctly handling occlusions and disocclusions.

For example, the disclosed concept may be applied to consumer electronics, in particular camera modules in smartphones, are one field of application. Here, the disclosed concept may provide for a reduction of the camera module height in order to get rid of the camera bump and furthermore, to be able to realize thinner smartphones, while maintaining the same high-resolution imaging. To that end, the target FoV is split into several smaller sub-FoVs, which can be captured by thinner - in height - imaging sensors. The different sub-FoVs may be realized by beam folding with a mirror system. The resulting overlapping high-resolution images can then be stitched together to create the desired high-resolution digital image depicting the full target FoV. Two potential examples would be to build a linear three or five camera array with the low-resolution fallback camera in the center. To reduce the camera module height, the fallback camera 701 may capture the whole target FoV with the same pixel technology as the other sensors (same pixel sizes) but with less pixels. According to one example, the number of pixels in horizontal and vertical dimension is reduced, for example by 60% each. For the 3-camera-system, e.g. as shown in Fig. 7, the left high-resolution satellite camera 702a may depict the upper 60% of the target FoV (realized by a tilted mirror 711) and the right high-resolution satellite camera 702b records the lower 60% of the target FoV. As the vertical FoV is reduced in the satellite cameras but the sensor height is the same as for the fallback camera, the effective spatial resolution is higher. These satellite images can then be used to enhance the spatial resolution of the target view for the whole target FoV as described in the concept above. To avoid problems from occlusions and disocclusions and hence to obtain an overall higher image quality, the 5-camera-system adds two additional cameras to the left and right. For the presented example, this means that the new left most camera now depicts the lower 60% of the target FoV and the new right most camera captures the upper 60%. With this alternating camera placement, issues from occlusions and disocclusions can be minimized.

Fig. 8 illustrates an apparatus 810, which may correspond to the apparatus 10. As input, the apparatus 10 may receive data from several high-resolution imaging sensors 702a-d that may record portions of the scene in a high spatial resolution each and a target low-resolution camera 701 which may cover the whole scene, but in a low spatial resolution. The imaging sensors can be aligned in a row, grid, or even completely arbitrarily placed in space. Independently of the actual alignment of the imaging sensors, the intrinsic and extrinsic camera parameters may be used for further processing. Firstly, the low-resolution camera 701 may act as a reference point for the other high-resolution satellite cameras 702a-d, from which the high frequency information should be taken, and secondly, it may serve as a fallback, if the before-mentioned mapping was erroneous. The first mechanism ensures high-quality image information, while the latter prevents visible artifacts in the final output image.

To properly project the high-resolution information from the satellite cameras 702a-d to the target camera 701, correspondences need to be found between them, e.g. as may be performed by the content correspondence determination module 50. However, these correspondences might be hard to find as the target camera 701 only offers a low-resolution image, while the satellite sensors provide high-resolution images. To mitigate the resolution mismatch, e.g. between the up-sampled base image 42 and the partial images 32, the high-resolution images are first down-sampled in order to get rid of the high frequencies, and are subsequently up-sampled again to keep the target (pixel) resolution, by the low-pass filter 3. The low-resolution target imaging sensor is also up-sampled to the target (pixel) resolution, e.g. by the up-sampling module 40. The filters involved in the down- and up-sampling process should be dimensioned such that the filtered modulation transfer function (MTF) of the high-resolution cameras matches that of the MTF of the low-resolution camera. Only then is the resolution mismatch treated properly. After this step, all images feature the same number of pixels and approximately the same sampling frequency allowing for a better finding of correspondences. An alternative to the down-/up-sampling strategy is to perform the correspondence search directly in the low-resolution domain by down-sampling only the high-resolution images.

Having the up-sampled low-resolution image 42, it is now necessary to determine for each of its pixels 44 from which pixel from one of the high-resolution images it can possibly be replaced or recalculated in order to increase the sharpness of the output image 92. In other words, it is necessary to establish correspondences between the pixels of the up-sampled low-resolution image 42 and the corresponding high-resolution images 32. These correspondences can be found by performing (pairwise) 2D disparity estimations, as by the content correspondence determination module 50, between the target view (up-sampled low-resolution image) 42 and one satellite view 32a-d (high-resolution image) each. As each high-resolution satellite view 32a-d only depicts a portion 22a-d of the whole scene, only the corresponding part from the target view 42 is extracted for the actual disparity estimation. For disparity estimation, there exists a huge amount of algorithms, and in principle, any of them can be used. In one embodiment, an optical flow-based approach is used for disparity estimation and may be applied in both directions, i.e., from target view 42 to a satellite view 32a-d and vice versa. The output of this step are displacement maps 52a-d - which may provide both X and Y pixel offsets - as well as the corresponding matching costs 58a-d per pixel for later use which numerically describe the similarity - or dissimilarity - between pairs of pixels or image blocks, e.g. regions around a specific pixel or sample. With the help of the 2D displacement maps 52a-d valid at the target camera position, i.e., the estimations from the target camera 42 (up-sampled low-resolution image) to the satellite cameras 32a-d, and with the original high-resolution input images 32a-d, a backward warping 6 is performed to render the high-resolution information to the position of the target camera 701. Backward warping is the process of fetching pixel values from a source image 32a-d by following the corresponding displacement vectors 52a-d valid at the target image 42 and writing them to the target image 42. As displacement vectors may be floating-point accurate, an additional interpolation step may be necessary to pick the correct color information from intermediate pixel positions, e.g. to determine the image values for the corresponding positions 36. The images 845a-d rendered from each satellite camera, e.g. the corresponding partial images 32a-d, have to be combined in the next step to form a single output image, e.g. the blended image 62.

As each rendered image is likely not free of occlusions or disocclusions or rendering artifacts, and several satellite views might cover overlapping scene portions, the image combination 59 may be performed according to their pixel-wise matching costs 58a-d favoring pixel values with a lower corresponding matching cost 58a-d. The actual combination may be realized by a weighted average on a pixel-by-pixel basis. If the corresponding matching cost of a pixel value candidate, e.g. an image value of one of the corresponding positions 36 associated to the respective pixel or sample, exceeds a certain cost threshold or predetermined similarity threshold, it may be directly rejected, e.g. by the combination module 8, prior to the weighted average computation, or the respective weight may be set to zero. All pixel positions where the defined cost threshold is exceeded for all available candidates are replaced, e.g. by the thresholding 9, by the pixel values from the up-sampled fallback image 42, i.e., the up-sampled target camera view (up-sampled low-resolution image), to avoid artifacts. The output of these steps is a combined, blended image 62 containing information from all rendered images as well as from the fallback image. The cost-based image combination 8 and the cost thresholding 9 may form the first part, namely the cost-based fallback switch 59, of a triple fallback switch mechanism. Thus, in this embodiment, the matching cost 58a-d, e.g. the measure for similarity or dissimilarity, is used as one first measure 58 for obtaining the blended image 62. The cost-based fallback switch intercepts all artifacts that can be detected by large matching cost values.

The second fallback switch 75a, e.g. the first type of recalculation 75, is based on color differences and thus it tries to intercept artifacts where a color difference is visible but the matching costs were not decisive. This can happen because pixel correspondences are determined using their local neighborhoods. Consequently, for instance at depth discontinuities, wrong pixel correspondences can still have low matching costs. In order to compute a difference in first place, a reference is required. To that end, the up-sampled fallback image 42 is employed. The blended image, on the other hand, is low-pass filtered 3 by down-sampling and subsequent up-sampling, which may be part of the filter 70, in order to mitigate the resolution mismatch between both images. Moreover, to better match the human visual system, the images may first be transformed 871 from RGB to Lab color space, e.g. to obtain the converted blended image 62'. After color space conversion, the color difference between the blended image and the up-sampled fallback image 62', e.g. as determined by the second measure determination module 67a, is compared against a defined color threshold 86a on a pixel-by-pixel basis. The output of this threshold step is a decision mask 72a that depicts where the blended image 62 can be used and where the fallback image 42 must be taken instead. This decision mask is further smoothened, e.g. filtered by a Gaussian kernel, which may for example have a size of 5x5 with a standard deviation of 1.0, in order to soften the transition between blended image content and fallback image content. After this filtering, the decision mask 72a is not binary any longer, but may contain values between 0 and 1 at blending edges. The actual blending 69 may then be performed using the RGB versions of the fallback and blended images according to the just mentioned decision mask. For example, the recalculation of the blended image may be performed, for each of the samples of the blended image 62, according to

$$I'_{blend} = I_{blend} \cdot (1 - D_{col}) + I_{fallback} \cdot D_{col}$$

wherein $I'_{blend}$ may represent the recalculated blended image sample value for the respective sample 64a, $I_{blend}$ the blended image sample value of the respective sample 64a, D the decision value of the corresponding sample of the decision map 72a, and $I_{fallback}$ the sample value of the corresponding up-sampled base image sample 44a.

The third fallback switch 75b, e.g. the second type of recalculation 75, is based on disparity values and it tries to intercept all potentially remaining artifacts. For that purpose, a 2D self-disparity estimation is to be computed between the newly blended image and the up-sampled fallback image, e.g. by the second measure determination module 67b, so as to derive the measure of dissimilarity or similarity 68b. To alleviate the resolution mismatch between the blended image 62 and the up-sampled fallback image 42, the blended image 62 is yet again low-pass filtered 70 by first down-sampling and subsequent up-sampling. As both the up-sampled fallback image 42 and the resampled, blended one 62 depict the same view and approximately have the same sampling frequency, the resulting displacement map should contain only vectors close to zero if there are no artifacts and only find farther away located correspondences in cases of artifacts. If there are vectors not close to zero, this indicates that the image contains multiple similar image regions, being prone to correspondence mismatches and hence to rendering artifacts. The computed self-disparity map is then thresholded 76b against a certain disparity threshold yielding another decision mask 72b. As for the second fallback switch, the decision mask 72b is smoothened, e.g. by a Gaussian kernel to soften the transition between blended 62 and fallback image 42. The actual blending 69 is then conducted using the non-resampled, blended image and the fallback image according to the decision mask 76b. The output after this step is the final high-resolution, output image 92 at the position of the target camera. For example, the recalculation 75b of the blended image may be performed, for each of the samples of the blended image 62, according to

$$I''_{blend} = I'_{blend} \cdot \left(1 - D_{disp}\right) + I_{fallback} \cdot D_{disp}$$

wherein $I''_{blend}$ may represent the recalculated blended image sample value for the respective sample 64a, $I'_{blend}$ the blended image sample value of the respective sample 64a, D the decision value of the corresponding sample of the decision map 72b, and $I_{fallback}$ the sample value of the corresponding up-sampled base image sample 44a.

The triple fallback switch mechanism may assure the best possible image quality, while suppressing most or all visible artifacts.

It has to be noted that the order of these fallback switches 59, 75a, 75b can be interchanged, and some of them may be omitted. The thresholds required for the three fallback switches are determined on the fly in the automatic threshold determination block 80. The best image quality is obtained not always for the same set of threshold values, as they are dependent on the scene to a varying degree of extent. The cost threshold or similarity threshold, for instance, may highly fluctuate from scene to scene and it cannot be simply reused. In order to compute the thresholds on the fly, an image quality metric is required. To that end, the peak signal-to-noise ratio (PSNR) may be employed. The PSNR metric, however, is a full-reference quality metric and thus requires a reference to compare with. Therefore, the original low-resolution fallback image 30 without any upscaling may be used as reference. To reduce the solution space, the thresholds may be optimized one after the other, for example in the following order: color threshold, disparity threshold, and cost or similarity threshold. First, the color threshold may be optimized by disabling the cost thresholding 9, e.g. by setting weights of all image values to a maximum value and the weight for the sample value of the corresponding up-sample base image sample to zero, and setting the disparity threshold to a predefined default value. The cost threshold needs to be disabled here as it varies largely and a good default value is not easy to find. Then the proposed pipeline is executed up to the second fallback switch. From here on, several possible color thresholds are evaluated. To find the best performing color threshold, the final high-resolution output image (after all fallback switches) is down-sampled to the low resolution of the original fallback image 30 and a PSNR value is computed. The color threshold leading to the best PSNR value is then selected and fixed. The next threshold - the disparity threshold 76b - is computed analogously but with the just selected color threshold. Finally, both computed thresholds are fixed and the pipeline is restarted from the first fallback switch onwards to find the last threshold. After having calculated all three thresholds, the pipeline continues with the cost-based image combination 8 as described above. The presented automatic threshold determination step is one of several possible ways to optimize for the best set of threshold values.

The disclosed concept may be advantageously applied, for example, for surveillance systems where on the one hand, large FoVs need to be covered (for instance, parking lots) and on the other hand, high-resolution images are required to identify people or license plates. For this application, a low-resolution fallback camera capturing the full target FoV can be used as a baseline and multiple high-resolution satellite cameras can be installed to enhance the spatial resolution of this baseline without adding visible artifacts.

Fig. 9 illustrates the benefits of determining 50 the content correspondences based on the up-sampled base image 42 according to an embodiment. Fig. 9 shows an example of the image content 20, comprising a first blue object 901 and a second blue object 902 in the scene observed from two input views 920, 922, e.g. two partial images or one of the partial images 32 and the base image 30. The disparity estimation as performed by the content correspondence determination module 50 might find correspondences 952, 953, 954 between the images 920, 922. While correspondences 953, 954 are correct, correspondence 952 may have been found based on a valid color information between bue object 901 in view 920 and blue object 902 in view 922, thus yielding an erroneous correspondence 952. Scaling the disparity vector after finding the correspondences, results in a scaling of this physically invalid disparity vector, leading to an association or warping of the color information of the blue object to the corresponding position in the target view 930. However, since the disparity vector was estimated incorrectly, the target pixel position might be completely off yielding a blue rendering artifact. As in the disclosed concept, the correspondences are determined based on the up-sampled base image 42, a physically incorrect disparity vector in the disclosed pipeline does not have to be further scaled and hence the wrong, but similar blue color information will stay at approximately the correct position. Overall, this leads to a massive reduction in potential artifacts.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

References

[1] T. Köhler, M. Batz, F. Naderi, A. Kaup, A. Maier and C. Riess, "Toward Bridging the Simulated-to-Real Gap: Benchmarking Super-Resolution on Real Data," IEEE Transactions on Pattern Analysis and Machine Intelligence, 2019.

[2] M. E. CORPORATION, "HIGH-RESOLUTION IMAGE GENERATION APPARATUS, HIGH-RESOLUTION IMAGE GENERATION METHOD, AND HIGH-RESOLUTION IMAGE GENERATION PROGRAM". Patent US9563937B2.

[3] L. L. Inc., "METHODS AND APPARATUS FOR GENERATING A SHARP IMAGE", Patent US9824427B2.

[4] L. L. Inc., "METHODS AND APPARATUS FOR REDUCING NOISE IN IMAGES". Patent US9967535B2.

[5] F. IOF, "Vorrichtung zur Abbildung von Teilgesichtsfeldern, Multiaperturabbildungsvorrichtung und Verfahren zum Bereitstellen derselben". Patent DE102017206442A1.

[6] T. Richter, J. Seiler, W. Schnurrer and A. Kaup, "Robust Super-Resolution for Mixed-Resolution Multiview Image Plus Depth Data," IEEE Transactions on Circuits and Systems for Video Technology, 2016.

[7] D. e. GmbH, "Dallmeier," [Online]. Available: https://www.dallmeier.com/de/ueber-uns/presse/europaeisches-patent-fuer-multifocal-sensorsystem-panomerar-von-dallmeier-electronic.

[8] D. electronic, "ÜBERWACHUNGSEINRICHTUNG". EU Patent EP2715692B1.

**Claims**

1. Apparatus (10) for acquiring a digital image (92) of an image content (20) configured to

obtain a base image (30) of the image content (20) the base image having a base resolution,
obtain a plurality of partial images (32), each of the partial images (32a, 32b) representing a respective portion (22a, 22b) of the image content (20) and having a respective input resolution higher than the base resolution,
up-sample (40) the base image (30) to a target resolution so as to obtain an up-sampled base image (42),
for each of the partial images (32a, 32b), determine (50) image content correspondences between the up-sampled base image (42) and the respective partial image (32a, 32b), so as to obtain a disparity map (52a, 52b) associating positions (46, 47) within the up-sampled base image (42) and corresponding positions (36a, 36b, 37b) within the respective partial image (32a, 32b),

wherein the apparatus is configured to derive the digital image (92) at the target resolution by

overlaying (60) the up-sampled base image (42) with the partial images (32) based on, for each partial image (32a, 32b), the disparity maps (52a, 52b) determined for the respective partial image (32a, 32b), and deriving, for each of samples of the digital image (92), a digital image sample value based on

a sample value of a corresponding up-sampled base image sample (44a) of the up-sampled base image (42) and

one or more image values, each at one of one or more corresponding positions (36a, 36b) within the partial images (32a, 32b), wherein each of the corresponding positions (36a, 36b) is within one of the partial images (32a, 32b) and is associated with the position (46) of the corresponding up-sampled base image sample (44a) according to the disparity map (52a, 52b) determined for the one partial image (32a, 32b), and

wherein the apparatus is configured to adapt contributions of the sample value of the corresponding up-sampled base image sample (44a) and the one or more image values to the digital image sample value of the respective sample (94a) based on one or more measures (58, 68) for a quality of the overlaying (60) of the up-sampled base image (42) with the partial images (32).

2. Apparatus (10) according to claim 1, wherein the apparatus is configured to

low-pass filter the partial images (32) to obtain filtered partial images, and

determine the image content correspondences based on the filtered partial images.

3. Apparatus (10) according to any of the preceding claims, configured to
adapt contributions of the sample value of the corresponding up-sampled base image sample (44a) and the one or more image values to the digital image sample value of the respective sample (94a) based on one or more first measures (58) for a matching of the up-sampled base image (42) at the position of the corresponding up-sampled base image sample (44a) on the one hand, and the partial images (32), to which the one or more corresponding positions (36a, 36b) refer, at the respective corresponding position (36a, 36b) on the other hand.

4. Apparatus (10) according to any of the preceding claims,
wherein the apparatus is configured to derive the digital image (92) at the target resolution by deriving a blended image (62) by determining, for each of samples of the blended image (62), a blended image sample value for the respective sample (64a) of the blended image (62) based on

the sample value of the corresponding up-sampled base image sample (44a) of the up-sampled base image (42) and

the one or more image values, each at one of one or more corresponding positions within the partial images (32).

5. Apparatus (10) according to claim 4, configured to
derive the digital image (92) from the blended image (62) by determining, for each of samples (94) of the digital image (92), the digital image sample value for the respective sample (94a) of the digital image (92) based on

the blended image sample value of a corresponding sample (64a) of the blended image (62) of the respective sample (94a) and

the sample value of the corresponding up-sampled base image sample (44a) of the corresponding sample (64a) of the blended image (62) of the respective sample (94a).

6. Apparatus (10) according to claim 5, configured to
adapt contributions of the sample value of the corresponding up-sampled base image sample (44a) and the blended image sample value of the corresponding sample (64a) of the blended image (62) based on one or more second measures (68, 68a, 68b) for a matching of the up-sampled base image (42) at the position of the corresponding up-sampled base image sample (44a) on the one hand, and the blended image (62) at the position of the corresponding sample (64a) of the blended image (62, 62') of the respective sample (94a) on the other hand.

**7.** Apparatus (10) according to any of the claims 4 to 6, configured to

determine the blended image sample value for the respective sample (64a) of the blended image (62) based on a first weighted sum (59) of the sample value of the corresponding up-sampled base image sample (44a) and the one or more image values at corresponding positions (36a, 36b) within the partial images (32a, 32b), and in the first weighted sum (59) for the respective digital image sample value,

set a weight of the first weighted sum (59) for each of the one or more corresponding positions depending on a measure (58) of dissimilarity or similarity between the up-sampled base image (42) at the position of the corresponding up-sampled base image sample (44a) and the partial image (32a, 32b), within which the respective corresponding position (36a, 36b) is, at the respective corresponding position (36a, 36b).

**8.** Apparatus (10) according to claim 7, configured to

set, for each of the one or more corresponding positions (36a, 36b) within the partial images (32), the weight of the first weighted sum (59) to zero, if the measure for dissimilarity or similarity indicates a similarity lower than a predetermined similarity threshold (86c), and adapt the predetermined similarity threshold (86c) by

determining a quality measure for the digital image (92), and adapt the predetermined similarity threshold (86c) under consideration of the quality measure.

**9.** Apparatus (10) according to any of the claims 4 to 8, configured to recalculate, for each sample (64) of the blended image (62), the blended image sample value based on a second weighted sum (69, 69a) of the blended image sample value of the respective sample (64a) and the sample value of the corresponding up-sampled base image sample (44a) of the respective sample (64a), wherein weights for the second weighted sum (69, 69a) depend on a color difference between the blended image (62, 62') at the respective sample (64a, 64'a) of the blended image (62, 62') and the up-sampled base image (42, 42') at the corresponding up-sampled base image sample (44a, 44'a) of the respective sample (64a, 64'a).

**10.** Apparatus (10) according to any of the claims 4 to 8, configured to recalculate, for each sample (64) of the blended image (62), the blended image sample value based on a third weighted sum (69, 69b) of the blended image sample value of the respective sample and the sample value of the corresponding up-sampled base image sample (44a) of the respective sample, wherein weights for the third weighted sum (69, 69b) depend on a disparity value indicating a dissimilarity or similarity between the blended image (62, 62') at a position of the respective sample (64a, 64'a) of the blended image (62, 62') and the up-sampled base image (42, 42') at a position of the corresponding up-sampled base image sample (44a, 44'a) of the respective sample (64a, 64'a).

**11.** Apparatus according to claim 9, configured to,

after recalculating, for each sample (64) of the blended image (62), the blended image sample value based on the second weighted sum (69, 69a), recalculate, for each sample (64) of the blended image (62), the blended image sample value based on a third weighted sum (69, 69b) of the blended image sample value of the respective sample and the sample value of the corresponding up-sampled base image sample (44a) of the respective sample, wherein weights for the third weighted sum (69, 69b) depend on a disparity value indicating a dissimilarity or similarity between the blended image (62, 62') at a position of the respective sample (64a, 64'a) of the blended image (62, 62') and the up-sampled base image (42, 42') at a position of the corresponding up-sampled base image sample (44a, 44'a) of the respective sample (64a, 64'a).

**12.** Apparatus (10) according to any of the claims 9 to 11, configured to

low-pass filter the blended image (62) to obtain a filtered blended image (62'), and determine the color differences based on the filtered blended image (62').

**13.** Apparatus (10) according to any of the claims 9 to 12, configured to

derive a transformed up-sampled base image (42') from the up-sampled base image (42) by using a color space transformation,

derive a transformed blended image (62') based on the blended image (62) by using the color space transformation,

determine the second weighted sums (69, 69a) based on the transformed up-sampled base image (42)' and the transformed blended image (62').

14. Apparatus (10) according to claim 9 to 13, wherein the weights of the second weighted sum (69, 69a) for the respective sample (64a) depend on whether the color difference (68a) between the blended image at the respective sample of the blended image and the up-sampled base image (42) at the corresponding up-sampled base image sample (44a) of the respective sample (64a) exceeds a predetermined color threshold or not, and wherein the apparatus is configured to adapt the predetermined color threshold (86a) by

determining a quality measure for the digital image (92),
adapt the predetermined color threshold (86a) under consideration of the quality measure.

15. Apparatus (10) according to any of the claims 10 to 14, is configured to

low-pass filter the blended image (62) to obtain a filtered blended image (62'), and
determine the disparity values based on the filtered blended image (62').

16. Apparatus (10) according to any of the claims 10 to 15, wherein the weights of the third weighted sum (69, 69b) for the respective sample (64a) depend on whether the disparity value of the respective sample exceeds a predetermined disparity threshold (86b) or not, and wherein the apparatus is configured to adapt the predetermined disparity threshold (86b) by

determining a quality measure for the digital image (92),
adapt the predetermined disparity threshold (86b) under consideration of on the quality measure.

17. Method for acquiring a digital image (92) of an image content, comprising

obtain a base image of the image content, the base image having a base resolution,
obtain a plurality of partial images (32), each of the partial images (32a, 32b) representing a respective portion (22a, 22b) of the image content (20) and having a respective input resolution higher than the base resolution,
up-sample the base image to a target resolution so as to obtain an up-sampled base image (42),
for each of the partial images, determine image content correspondences between the up-sampled base image (42) and the respective partial image so as to obtain a disparity map associating positions within the up-sampled base image (42) and corresponding positions within the respective partial image,
wherein the method comprises to derive the digital image (92) at the target resolution by

overlaying the up-sampled base image (42) with the partial images based on, for each partial image, the disparity maps determined for the respective partial image, and
deriving, for each of samples of the digital image (92), a digital image sample value based on

a sample value of a corresponding up-sampled base image sample (44a) of the up-sampled base image (42) and
one or more image values, each at one of one or more corresponding positions (36a, 36b) within the partial images (32a, 32b), wherein each of the corresponding positions (36a, 36b) is within one of the partial images (32a, 32b) and is associated with the position (46) of the corresponding up-sampled base image sample (44a) according to the disparity map (52a, 52b) determined for the one partial image (32a, 32b), and

wherein the method comprises to adapt contributions of the sample value of the corresponding up-sampled base image sample (44a) and the one or more image values to the digital image sample value of the respective sample (94a) based on one or more measures (58, 68) for a quality of the overlaying (60) of the up-sampled base image (42) with the partial images (32).

18. A computer program for implementing the method of claim 17 when being executed on a computer or signal processor.

**Patentansprüche**

1. Vorrichtung (10) zum Erfassen eines digitalen Bilds (92) eines Bildinhalts (20), die ausgebildet ist zum:

   Erhalten eines Basisbilds (30) des Bildinhalts (20), wobei das Basisbild eine Basisauflösung aufweist,
   Erhalten einer Mehrzahl von Teilbildern (32), wobei jedes der Teilbilder (32a, 32b) einen jeweiligen Abschnitt (22a, 22b) des Bildinhalts (20) darstellt und eine jeweilige Eingangsauflösung aufweist, die höher ist als die Basisauflösung,
   Aufwärtsabtasten (40) des Basisbilds (30) zu einer Zielauflösung, um so ein aufwärts abgetastetes Basisbild (42) zu erhalten,
   für jedes der Teilbilder (32a, 32b) Bestimmen (50) von Bildinhaltsentsprechungen zwischen dem aufwärts abgetasteten Basisbild (42) und dem jeweiligen Teilbild (32a, 32b), um so eine Disparitätsabbildung (52a, 52b) zu erhalten, die Positionen (46, 47) innerhalb des aufwärts abgetasteten Basisbilds (42) und entsprechende Positionen (36a, 36b, 37b) innerhalb des jeweiligen Teilbilds (32a, 32b) zuordnet,
   wobei die Vorrichtung dazu ausgebildet ist, das digitale Bild (92) bei der Zielauflösung herzuleiten durch:

   Überlagern (60) des aufwärts abgetasteten Basisbilds (42) mit den Teilbildem (32) basierend auf, für jedes Teilbild (32a, 32b), den Disparitätsabbildungen (52a, 52b), die für das jeweilige Teilbild (32a, 32b) bestimmt werden, und
   Herleiten, für jede von Abtastungen des digitalen Bilds (92), eines Abtastwerts des digitalen Bilds basierend auf:

   einem Abtastwert einer entsprechenden aufwärts abgetasteten Basisbildabtastung (44a) des aufwärts abgetasteten Basisbilds (42) und
   einem oder mehr Bildwerten, jedes an einer von einer oder mehr entsprechenden Positionen (36a, 36b) innerhalb der Teilbilder (32a, 32b), wobei jede der entsprechenden Positionen (36a, 36b) innerhalb eines der Teilbilder (32a, 32b) liegt und der Position (46) der entsprechenden aufwärts abgetasteten Basisbildabtastung (44a) zugeordnet ist, gemäß der Disparitätsabbildung (52a, 52b), die für das eine Teilbild (32a, 32b) bestimmt wird, und

   wobei die Vorrichtung dazu ausgebildet ist, Beiträge des Abtastwerts der entsprechenden aufwärts abgetasteten Basisbildabtastung (44a) und des einen oder der mehr Bildwerte zu dem Abtastwert des digitalen Bilds der jeweiligen Abtastung (94a) basierend auf einem oder mehr Maßen (58, 68) für eine Qualität der Überlagerung (60) des aufwärts abgetasteten Basisbilds (42) mit den Teilbildern (32) anzupassen.

2. Vorrichtung (10) gemäß Anspruch 1, wobei die Vorrichtung ausgebildet ist zum

   Tiefpassfiltern der Teilbilder (32), um gefilterte Teilbilder zu erhalten, und
   Bestimmen der Bildinhaltsentsprechungen basierend auf den gefilterten Teilbildern.

3. Vorrichtung (10) gemäß einem der vorherigen Ansprüche, die ausgebildet ist zum
   Anpassen von Beiträgen des Abtastwerts der entsprechenden aufwärts abgetasteten Basisbildabtastung (44a) und des einen oder der mehr Bildwerte zu dem Abtastwert des digitalen Bilds der jeweiligen Abtastung (94a) basierend auf einem oder mehr ersten Maßen (58) für ein Übereinstimmen des aufwärts abgetasteten Basisbilds (42) an der Position der entsprechenden aufwärts abgetasteten Basisbildabtastung (44a) einerseits und der Teilbilder (32), auf die sich die eine oder die mehr entsprechenden Positionen (36a, 36b) beziehen, an der jeweiligen entsprechenden Position (36a, 36b) andererseits.

4. Vorrichtung (10) gemäß einem der vorherigen Ansprüche,
   wobei die Vorrichtung dazu ausgebildet ist, das digitale Bild (92) bei der Zielauflösung herzuleiten durch Herleiten eines vermengten Bilds (62) durch Bestimmen, für jede von Abtastungen des vermengten Bilds (62), eines vermengten Bildabtastwerts für die jeweilige Abtastung (64a) des vermengten Bilds (62) basierend auf

   dem Abtastwert der entsprechenden aufwärts abgetasteten Bildabtastung (44a) des aufwärts abgetasteten Basisbilds (42) und
   dem einen oder den mehr Bildwerten, jeder an einer von einer oder mehr entsprechenden Positionen innerhalb der Teilbilder (32).

**5.** Vorrichtung (10) gemäß Anspruch 4, die ausgebildet ist zum
Herleiten des digitalen Bilds (92) aus dem vermengten Bild (62) durch Bestimmen, für jede von Abtastungen (94) des digitalen Bilds (92), des Abtastwerts des digitalen Bilds für die jeweilige Abtastung (94a) des digitalen Bilds (92) basierend auf

dem vermengten Bildabtastwert einer entsprechenden Abtastung (64a) des vermengten Bilds (62) der jeweiligen Abtastung (94a) und
dem Abtastwert der entsprechenden aufwärts abgetasteten Basisbildabtastung (44a) der entsprechenden Abtastung (64a) des vermengten Bilds (62) der jeweiligen Abtastung (94a).

**6.** Vorrichtung (10) gemäß Anspruch 5, die ausgebildet ist zum
Anpassen von Beiträgen des Abtastwerts der entsprechenden aufwärts abgetasteten Basisbildabtastung (44a) und des vermengten Bildabtastwerts der entsprechenden Abtastung (64a) des vermengten Bilds (62) basierend auf einem oder mehr zweiten Maßen (68, 68a, 68b) für ein Übereinstimmen des aufwärts abgetasteten Basisbilds (42) an der Position der entsprechenden aufwärts abgetasteten Basisbildabtastung (44a) einerseits und dem vermengten Bild (62) an der Position der entsprechenden Abtastung (64a) des vermengten Bilds (62, 62') der jeweiligen Abtastung (94a) andererseits.

**7.** Vorrichtung (10) gemäß einem der Ansprüche 4 bis 6, die ausgebildet ist zum Bestimmen des vermengten Bildabtastwerts für die jeweilige Abtastung (64a) des vermengten Bilds (62) basierend auf einer ersten gewichteten Summe (59) des Abtastwerts der entsprechenden aufwärts abgetasteten Basisbildabtastung (44a) und dem einen oder den mehr Bildwerten an entsprechenden Positionen (36a, 36b) innerhalb der Teilbilder (32a, 32b) und
bei der ersten gewichteten Summe (59) für den jeweiligen Abtastwert des digitalen Bilds,
Einstellen eines Gewichts der ersten gewichteten Summe (59) für jede der einen oder mehr entsprechenden Positionen abhängig von einem Maß (58) einer Unähnlichkeit oder Ähnlichkeit zwischen dem aufwärts abgetasteten Basisbild (42) an der Position der entsprechenden aufwärts abgetasteten Basisbildabtastung (44a) und dem Teilbild (32a, 32b), innerhalb dessen sich die jeweilige entsprechende Position (36a, 36b) befindet, an der jeweiligen entsprechenden Position (36a, 36b).

**8.** Vorrichtung (10) gemäß Anspruch 7, die ausgebildet ist zum

Einstellen, für jede der einen oder mehr entsprechenden Positionen (36a, 36b) innerhalb der Teilbilder (32), des Gewichts der ersten gewichteten Summe (59) auf null, wenn das Maß für eine Unähnlichkeit oder Ähnlichkeit eine Ähnlichkeit unterhalb einer vorbestimmten Ähnlichkeitsschwelle (86c) anzeigt, und
Anpassen der vorbestimmten Ähnlichkeitsschwelle (86c) durch

Bestimmen eines Qualitätsmaßes für das digitale Bild (92) und
Anpassen der vorbestimmten Ähnlichkeitsschwelle (86c) unter Berücksichtigung des Qualitätsmaßes.

**9.** Vorrichtung (10) gemäß einem der Ansprüche 4 bis 8, die ausgebildet ist zum
Neuberechnen, für jede Abtastung (64) des vermengten Bilds (62), des vermengten Bildabtastwerts basierend auf einer zweiten gewichteten Summe (69, 69a) des vermengten Bildabtastwerts der jeweiligen Abtastung (64a) und dem Abtastwert der entsprechenden aufwärts abgetasteten Basisbildabtastung (44a) der jeweiligen Abtastung (64a), wobei Gewichte für die zweite gewichtete Summe (69, 69a) von einer Farbdifferenz zwischen dem vermengten Bild (62, 62') an der jeweiligen Abtastung (64a, 64'a) des vermengten Bilds (62, 62') und dem aufwärts abgetasteten Basisbild (42, 42') bei der entsprechenden aufwärts abgetasteten Basisbildabtastung (44a, 44'a) der jeweiligen Abtastung (64a, 64'a) abhängen.

**10.** Vorrichtung (10) gemäß einem der Ansprüche 4 bis 8, die ausgebildet ist zum
Neuberechnen, für jede Abtastung (64) des vermengten Bilds (62), des vermengten Bildabtastwerts basierend auf einer dritten gewichteten Summe (69, 69b) des vermengten Bildabtastwerts der jeweiligen Abtastung und dem Abtastwert der entsprechenden aufwärts abgetasteten Basisbildabtastung (44a) der jeweiligen Abtastung, wobei Gewichte für die dritte gewichtete Summe (69, 69b) von einem Disparitätswert abhängen, der eine Unähnlichkeit oder Ähnlichkeit zwischen dem vermengten Bild (62, 62') an einer Position der jeweiligen Abtastung (64a, 64'a) des vermengten Bilds (62, 62') und dem aufwärts abgetasteten Basisbild (42, 42') an einer Position der jeweiligen aufwärts abgetasteten Basisbildabtastung (44a, 44'a) der jeweiligen Abtastung (64a, 64'a) anzeigt.

**11.** Vorrichtung gemäß Anspruch 9, die ausgebildet ist zum

nach dem Neuberechnen, für jede Abtastung (64) des vermengten Bilds (62), des vermengten Bildabtastwerts basierend auf der zweiten gewichteten Summe (69, 69a),

Neuberechnen, für jede Abtastung (64) des vermengten Bilds (62), des vermengten Bildabtastwerts basierend auf einer dritten gewichteten Summe (69, 69b) des vermengten Bildabtastwerts der jeweiligen Abtastung und dem Abtastwert der entsprechenden aufwärts abgetasteten Basisbildabtastung (44a) der jeweiligen Abtastung, wobei Gewichte für die dritte gewichtete Summe (69, 69b) von einem Disparitätswert abhängen, der eine Unähnlichkeit oder Ähnlichkeit zwischen dem vermengten Bild (62, 62') an einer Position der jeweiligen Abtastung (64a, 64'a) des vermengten Bilds (62, 62') und dem aufwärts abgetasteten Basisbild (42, 42') an einer Position der entsprechenden aufwärts abgetasteten Basisbildabtastung (44a, 44'a) der jeweiligen Abtastung (64a, 64'a) anzeigt.

12. Vorrichtung (10) gemäß einem der Ansprüche 9 bis 11, die ausgebildet ist zum

Tiefpassfiltern des vermengten Bilds (62), um ein gefiltertes vermengtes Bild (62') zu erhalten, und
Bestimmen der Farbdifferenzen basierend auf dem gefilterten vermengten Bild (62').

13. Vorrichtung (10) gemäß einem der Ansprüche 9 bis 12, die ausgebildet ist zum

Herleiten eines transformierten aufwärts abgetasteten Basisbilds (42') aus dem aufwärts abgetasteten Basisbild (42) durch Verwenden einer Farbraumtransformation,
Herleiten eines transformierten vermengten Bilds (62') basierend auf dem vermengten Bild (62) durch Verwenden der Farbraumtransformation,
Bestimmen der zweiten gewichteten Summen (69, 69a) basierend auf dem transformierten aufwärts abgetasteten Basisbild (42') und dem transformierten vermengten Bild (62').

14. Vorrichtung (10) gemäß Anspruch 9 bis 13, bei der die Gewichte der zweiten gewichteten Summe (69, 69a) für die jeweilige Abtastung (64a) davon abhängen, ob die Farbdifferenz (68a) zwischen dem vermengten Bild bei der jeweiligen Abtastung des vermengten Bilds und dem aufwärts abgetasteten Basisbild (42) bei der entsprechenden aufwärts abgetasteten Basisbildabtastung (44a) der jeweiligen Abtastung (64a) eine vorbestimmte Farbschwelle überschreiten oder nicht, und
wobei die Vorrichtung dazu ausgebildet ist, die vorbestimmte Farbschwelle (86a) anzupassen durch

Bestimmen eines Qualitätsmaßes für das digitale Bild (92),
Anpassen der vorbestimmten Farbschwelle (86a) unter Berücksichtigung des Qualitätsmaßes.

15. Vorrichtung (10) gemäß einem der Ansprüche 10 bis 14, die ausgebildet ist zum Tiefpassfiltern des vermengten Bilds (62), um ein gefiltertes vermengtes Bild (62') zu erhalten, und
Bestimmen der Disparitätswerte basierend auf dem gefilterten vermengten Bild (62').

16. Vorrichtung (10) gemäß einem der Ansprüche 10 bis 15, bei der die Gewichte der dritten gewichteten Summe (69, 69b) für die jeweilige Abtastung (64a) davon abhängen, ob der Disparitätswert der jeweiligen Abtastung eine vorbestimmte Disparitätsschwelle (86b) überschreitet oder nicht, und
wobei die Vorrichtung dazu ausgebildet ist, die vorbestimmte Disparitätsschwelle (86b) anzupassen durch

Bestimmen eines Qualitätsmaßes für das digitale Bild (92),
Anpassen der vorbestimmten Disparitätsschwelle (86b) unter Berücksichtigung des Qualitätsmaßes.

17. Verfahren zum Erfassen eines digitalen Bilds (92) eines Bildinhalts, das folgende Schritte aufweist:

Erhalten eines Basisbilds des Bildinhalts, wobei das Basisbild eine Basisauflösung aufweist,
Erhalten einer Mehrzahl von Teilbildern, wobei jedes der Teilbilder einen jeweiligen Abschnitt des Bildinhalts darstellt und eine jeweilige Eingangsauflösung aufweist, die höher ist als die Basisauflösung,
Aufwärtsabtasten des Basisbilds zu einer Zielauflösung, um so ein aufwärts abgetastetes Basisbild zu erhalten,
für jedes der Teilbilder Bestimmen von Bildinhaltsentsprechungen zwischen dem aufwärts abgetasteten Basisbild und dem jeweiligen Teilbild, um so eine Disparitätsabbildung zu erhalten, die Positionen innerhalb des aufwärts abgetasteten Basisbilds und entsprechende Positionen innerhalb des jeweiligen Teilbilds zuordnet,
wobei das Verfahren ein Herleiten des digitalen Bild (92) bei der Zielauflösung aufweist durch:

Überlagern des aufwärts abgetasteten Basisbilds mit den Teilbildern basierend auf, für jedes Teilbild, den Disparitätsabbildungen, die für das jeweilige Teilbild bestimmt werden, und

Herleiten, für jede von Abtastungen des digitalen Bilds (92), eines Abtastwerts des digitalen Bilds basierend auf:

einem Abtastwert einer entsprechenden aufwärts abgetasteten Basisbildabtastung (44a) des aufwärts abgetasteten Basisbilds (42) und

einem oder mehr Bildwerten, jedes an einer von einer oder mehr entsprechenden Positionen (36a, 36b) innerhalb der Teilbilder (32a, 32b), wobei jede der entsprechenden Positionen (36a, 36b) innerhalb eines der Teilbilder (32a, 32b) liegt und der Position (46) der entsprechenden aufwärts abgetasteten Basisbildabtastung (44a) zugeordnet ist, gemäß der Disparitätsabbildung (52a, 52b), die für das eine Teilbild (32a, 32b) bestimmt wird, und

wobei das Verfahren ein Anpassen von Beiträgen des Abtastwerts der entsprechenden aufwärts abgetasteten Basisbildabtastung (44a) und des einen oder der mehr Bildwerte zu dem Abtastwert des digitalen Bilds der jeweiligen Abtastung (94a) basierend auf einem oder mehr Maßen (58, 68) für eine Qualität der Überlagerung (60) des aufwärts abgetasteten Basisbilds (42) mit den Teilbildern (32) aufweist.

18. Ein Computerprogramm zum Implementieren des Verfahrens gemäß Anspruch 17 bei Ausführung auf einem Computer oder Signalprozessor.

## Revendications

1. Appareil (10) pour acquérir une image numérique (92) d'un contenu d'image (20) configuré pour

obtenir une image de base (30) du contenu d'image (20), l'image de base présentant une résolution de base,
obtenir une pluralité d'images partielles (32), chacune des images partielles (32a, 32b) représentant une partie respective (22a, 22b) du contenu d'image (20) et présentant une résolution d'entrée respective supérieure à la résolution de base,
échantillonner vers le haut (40) l'image de base (30) à une résolution cible de manière à obtenir une image de base échantillonnée vers le haut (42),
pour chacune des images partielles (32a, 32b), déterminer (50) les correspondances de contenu d'image entre l'image de base échantillonnée vers le haut (42) et l'image partielle respective (32a, 32b), de manière à obtenir une carte de disparité (52a, 52b) associant les positions (46, 47) dans l'image de base échantillonnée vers le haut (42) et les positions correspondantes (36a, 36b, 37b) dans l'image partielle respective (32a, 32b),
dans lequel l'appareil est configuré pour dériver l'image numérique (92) à la résolution cible en

superposant (60) l'image de base échantillonnée vers le haut (42) avec les images partielles (32) sur base, pour chaque image partielle (32a, 32b), des cartes de disparité (52a, 52b) déterminées pour l'image partielle respective (32a, 32b). 32b), et
dériver, pour chacun des échantillons de l'image numérique (92), une valeur d'échantillon de l'image numérique basée sur

une valeur d'échantillon d'un échantillon de l'image de base échantillonnée vers le haut correspondant (44a) de l'image de base échantillonnée vers le haut (42), et
une ou plusieurs valeurs d'image, chacune à une parmi une ou plusieurs positions correspondantes (36a, 36b) dans les images partielles (32a, 32b), où chacune des positions correspondantes (36a, 36b) se situe dans l'une des images partielles (32a. 32b) et est associée à la position (46) de l'échantillon de l'image de base échantillonnée vers le haut correspondant (44a) selon la carte de disparité (52a, 52b) déterminée pour l'une image partielle (32a, 32b), et

dans lequel l'appareil est configuré pour adapter les contributions de la valeur d'échantillon de l'échantillon de l'image de base échantillonnée vers le haut correspondant (44a) et des une ou plusieurs valeurs d'image à la valeur d'échantillon de l'image numérique de l'échantillon respectif (94a) sur base d'une ou plusieurs mesures (58, 68) pour une qualité de la superposition (60) de l'image de base échantillonnée vers le haut (42) avec les images partielles (32).

**2.** Appareil (10) selon la revendication 1, dans lequel l'appareil est configuré pour

filtrer passe-bas les images partielles (32) pour obtenir des images partielles filtrées, et
déterminer les correspondances de contenu d'image sur base des images partielles filtrées.

**3.** Appareil (10) selon l'une quelconque des revendications précédentes, configuré pour
adapter les contributions de la valeur d'échantillon de l'échantillon de l'image de base échantillonnée vers le haut correspondant (44a) et des une ou plusieurs valeurs d'image à la valeur d'échantillon de l'image numérique de l'échantillon respectif (94a) sur base d'une ou plusieurs premières mesures (58) pour une mise en correspondance de l'image de base échantillonnée vers le haut (42) à la position de l'échantillon de l'image de base échantillonnée vers le haut correspondant (44a), d'une part, et des images partielles (32) auxquelles se réfèrent les une ou plusieurs positions correspondantes (36a, 36b), à la position correspondante respective (36a, 36b), d'autre part.

**4.** Appareil (10) selon l'une quelconque des revendications précédentes,
dans lequel l'appareil est configuré pour dériver l'image numérique (92) à la résolution cible en dérivant une image mélangée (62) en déterminant, pour chacun des échantillons de l'image mélangée (62), une valeur d'échantillon de l'image mélangée pour l'échantillon respectif (64a) de l'image mélangée (62) sur base

de la valeur d'échantillon de l'échantillon de l'image de base échantillonnée vers le haut correspondant (44a) de l'image de base échantillonnée vers le haut (42), et
des une ou plusieurs valeurs d'image, chacune à l'une parmi une ou plusieurs positions correspondantes dans les images partielles (32).

**5.** Appareil (10) selon la revendication 4, configuré pour
dériver l'image numérique (92) de l'image mélangée (62) en déterminant, pour chacun des échantillons (94) de l'image numérique (92), la valeur d'échantillon de l'image numérique pour l'échantillon respectif (94a) de l'image numérique (92) sur base

de la valeur d'échantillon de l'image mélangée d'un échantillon correspondant (64a) de l'image mélangée (62) de l'échantillon respectif (94a), et
de la valeur d'échantillon de l'échantillon de l'image de base échantillonnée vers le haut correspondant (44a) de l'échantillon correspondant (64a) de l'image mélangée (62) de l'échantillon respectif (94a).

**6.** Appareil (10) selon la revendication 5, configuré pour
adapter les contributions de la valeur d'échantillon de l'échantillon de l'image de base échantillonnée vers le haut correspondant (44a) et de la valeur d'échantillon de l'image mélangée de l'échantillon correspondant (64a) de l'image mélangée (62) sur base d'une ou plusieurs deuxièmes mesures (68, 68a, 68b) pour une mise en correspondance de l'image de base échantillonnée vers le haut (42) à la position de l'échantillon de l'image de base échantillonnée vers le haut correspondant (44a), d'une part, et de l'image mélangée (62) à la position de l'échantillon correspondant (64a) de l'image mélangée (62, 62') de l'échantillon respectif (94a), d'autre part.

**7.** Appareil (10) selon l'une quelconque des revendications 4 à 6, configuré pour

déterminer la valeur d'échantillon de l'image mélangée pour l'échantillon respectif (64a) de l'image mélangée (62) sur base d'une première somme pondérée (59) de la valeur d'échantillon de l'échantillon de l'image de base échantillonnée vers le haut correspondant (44a) et des une ou plusieurs valeurs d'image à des positions correspondantes (36a, 36b) dans les images partielles (32a, 32b), et
dans la première somme pondérée (59) pour la valeur d'échantillon de l'image numérique respective,
régler un poids de la première somme pondérée (59) pour chacune des une ou plusieurs positions correspondantes en fonction d'une mesure (58) de dissimilitude ou de similitude entre l'image de base échantillonnée vers le haut (42) à la position de l'échantillon de l'image de base échantillonnée vers le haut correspondante (44a) et l'image partielle (32a, 32b) dans laquelle la position correspondante respective (36a, 36b) se situe à la position correspondante respective (36a, 36b).

**8.** Appareil (10) selon la revendication 7, configuré pour

régler, pour chacune des une ou plusieurs positions correspondantes (36a, 36b) dans les images partielles (32), le poids de la première somme pondérée (59) à zéro si la mesure de dissimilitude ou de similitude indique une similitude inférieure à un seuil de similitude prédéterminé (86c), et
adapter le seuil de similitude prédéterminé (86c)

en déterminant une mesure de qualité pour l'image numérique (92), et
en adaptant le seuil de similitude prédéterminé (86c) en tenant compte de la mesure de qualité.

9. Appareil (10) selon l'une quelconque des revendications 4 à 8, configuré pour
recalculer, pour chaque échantillon (64) de l'image mélangée (62), la valeur d'échantillon de l'image mélangée sur base d'une deuxième somme pondérée (69, 69a) de la valeur d'échantillon de l'image mélangée de l'échantillon respectif (64a) et de la valeur d'échantillon de l'échantillon de l'image de base échantillonnée vers le haut correspondant (44a) de l'échantillon respectif (64a), où les poids pour la deuxième somme pondérée (69, 69a) dépendent d'une différence de couleur entre l'image mélangée (62, 62') au niveau de l'échantillon respectif (64a, 64'a) de l'image mélangée (62, 62') et de l'image de base échantillonnée vers le haut (42, 42') au niveau de l'échantillon de l'image de base échantillonnée vers le haut correspondant (44a, 44'a) de l'échantillon respectif (64a, 64'a).

10. Appareil (10) selon l'une quelconque des revendications 4 à 8, configuré pour
recalculer, pour chaque échantillon (64) de l'image mélangée (62), la valeur d'échantillon de l'image mélangée sur base d'une troisième somme pondérée (69, 69b) de la valeur d'échantillon de l'image mélangée de l'échantillon respectif et de la valeur d'échantillon de l'échantillon de l'image de base échantillonnée vers le haut correspondant (44a) de l'échantillon respectif, où les poids pour la troisième somme pondérée (69, 69b) dépendent d'une valeur de disparité indiquant un dissimilitude ou similitude entre l'image mélangée (62, 62') à une position de l'échantillon respectif (64a, 64'a) de l'image mélangée (62, 62') et l'image de base échantillonnée vers le haut (42, 42') à une position de l'échantillon de l'image de base échantillonnée vers le haut correspondant (44a, 44'a) de l'échantillon respectif (64a, 64'a).

11. Appareil selon la revendication 9, configuré pour,

après avoir recalculé, pour chaque échantillon (64) de l'image mélangée (62), la valeur de l'échantillon de l'image mélangée sur base de la deuxième somme pondérée (69, 69a),
recalculer, pour chaque échantillon (64) de l'image mélangée (62), la valeur de l'échantillon de l'image mélangée sur base d'une troisième somme pondérée (69, 69b) de la valeur d'échantillon de l'image mélangée de l'échantillon respectif et de la valeur d'échantillon de l'échantillon de l'image de base échantillonnée vers le haut correspondant (44a) de l'échantillon respectif, où les poids pour la troisième somme pondérée (69, 69b) dépendent d'une valeur de disparité indiquant une dissimilitude ou similitude entre l'image mélangée (62, 62') à une position de l'échantillon respectif (64a, 64'a) de l'image mélangée (62, 62') et l'image de base échantillonnée vers le haut (42, 42') à une position de l'échantillon de l'image de base échantillonnée vers le haut correspondant (44a, 44'a) de l'échantillon respectif (64a, 64'a).

12. Appareil (10) selon l'une quelconque des revendications 9 à 11, configuré pour

filtrer passe-bas l'image mélangée (62) pour obtenir une image mélangée filtrée (62'), et
déterminer les différences de couleur sur base de l'image mélangée filtrée (62').

13. Appareil (10) selon l'une quelconque des revendications 9 à 12, configuré pour

dériver une image de base échantillonnée vers le haut transformée (42') à partir de l'image de base échantillonnée vers le haut (42) à l'aide d'une transformation de l'espace de couleur,
dériver une image mélangée transformée (62') sur base de l'image mélangée (62) à l'aide de la transformation de l'espace de couleur,
déterminer les deuxièmes sommes pondérées (69, 69a) sur base de l'image de base échantillonnée vers le haut transformée (42') et de l'image mélangée transformée (62').

14. Appareil (10) selon les revendications 9 à 13, dans lequel les poids de la deuxième somme pondérée (69, 69a) pour l'échantillon respectif (64a) dépendent de si la différence de couleur (68a) entre l'image mélangée au niveau de l'échantillon respectif de l'image mélangée et l'image de base échantillonnée vers le haut (42) au niveau de l'échantillon de l'image de base échantillonnée vers le haut correspondant (44a) de l'échantillon respectif (64a) excède ou non un seuil de couleur prédéterminé, et
dans lequel l'appareil est configuré pour adapter le seuil de couleur prédéterminé (86a) en

déterminant une mesure de qualité pour l'image numérique (92),
adaptant le seuil de couleur prédéterminé (86a) en tenant compte de la mesure de qualité.

15. Appareil (10) selon l'une quelconque des revendications 10 à 14, qui est configuré pour

filtrer passe-bas l'image mélangée (62) pour obtenir une image mélangée filtrée (62'), et
déterminer les valeurs de disparité sur base de l'image mélangée filtrée (62').

16. Appareil (10) selon l'une quelconque des revendications 10 à 15, dans lequel les poids de la troisième somme pondérée (69, 69b) pour l'échantillon respectif (64a) dépendent de si la valeur de disparité de l'échantillon respectif excède ou non un seuil de disparité prédéterminé (86b), et
dans lequel l'appareil est configuré pour adapter le seuil de disparité prédéterminé (86b) en

déterminant une mesure de qualité pour l'image numérique (92),
adaptant le seuil de disparité prédéterminé (86b) en tenant compte de la mesure de qualité.

17. Procédé pour acquérir une image numérique (92) d'un contenu d'image, comprenant le fait de

obtenir une image de base du contenu d'image, l'image de base présentant une résolution de base,
obtenir une pluralité d'images partielles (32), chacune des images partielles (32a, 32b) représentant une partie respective (22a, 22b) du contenu d'image (20) et présentant une résolution d'entrée respective supérieure à la résolution de base,
échantillonner vers le haut l'image de base à une résolution cible de manière à obtenir une image de base échantillonnée vers le haut (42),
pour chacune des images partielles, déterminer les correspondances de contenu d'image entre l'image de base échantillonnée vers le haut (42) et l'image partielle respective de manière à obtenir une carte de disparité associant les positions dans l'image de base échantillonnée vers le haut (42) et les positions correspondantes dans l'image partielle respective,
dans lequel le procédé comprend le fait de dériver l'image numérique (92) à la résolution cible en

superposant l'image de base échantillonnée vers le haut (42) avec les images partielles sur base, pour chaque image partielle, des cartes de disparité déterminées pour l'image partielle respective, et
dériver, pour chacun des échantillons de l'image numérique (92), une valeur d'échantillon de l'image numérique sur base de

une valeur d'échantillon d'un échantillon de l'image de base échantillonnée vers le haut correspondant (44a) de l'image de base échantillonnée vers le haut (42), et
une ou plusieurs valeurs d'image, chacune à l'une parmi une ou plusieurs positions correspondantes (36a, 36b) dans les images partielles (32a, 32b), où chacune des positions correspondantes (36a, 36b) se situe dans l'une des images partielles (32a, 32b) et est associée à la position (46) de l'échantillon de l'image de base échantillonnée vers le haut correspondant (44a) selon la carte de disparité (52a, 52b) déterminée pour l'une image partielle (32a, 32b), et

dans lequel le procédé comprend le fait d'adapter les contributions de la valeur d'échantillon de l'échantillon de l'image de base échantillonnée vers le haut correspondant (44a) et des une ou plusieurs valeurs d'image à la valeur d'échantillon de l'image numérique de l'échantillon respectif (94a) sur base d'une ou plusieurs mesures (58, 68) pour une qualité de la superposition (60) de l'image de base échantillonnée vers le haut (42) avec les images partielles (32).

18. Programme d'ordinateur pour mettre en oeuvre le procédé selon la revendication 17 lorsqu'il est exécuté sur un ordinateur ou un processeur de signal.

Fig. 1

Fig. 2

Fig. 3

## Fig. 4

Fig. 5

Fig. 6

Fig. 7

Fig. 8 (Part 1)

Fig. 8 (Part 2)

Fig. 9

EP 4 147 193 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017210987 A1
- US 2020029023 A1
- US 9563937 B2
- US 9824427 B2
- US 9967535 B2
- DE 102017206442 A1
- EP 2715692 B1

**Non-patent literature cited in the description**

- **T. KÖHLER ; M. BATZ ; F. NADERI ; A. KAUP ; A. MAIER ; C. RIESS.** Toward Bridging the Simulated-to-Real Gap: Benchmarking Super-Resolution on Real Data. *IEEE Transactions on Pattern Analysis and Machine Intelligence,* 2019
- **T. RICHTER ; J. SEILER ; W. SCHNURRER ; A. KAUP.** Robust Super-Resolution for Mixed-Resolution Multiview Image Plus Depth Data. *IEEE Transactions on Circuits and Systems for Video Technology,* 2016
- **D. E. GMBH.** *Dallmeier, https://www.dallmeier.com/de/ueber-uns/presse/europaeisches-patent-fuer-multifocal-sensorsystem-panomerar-von-dallmeier-electronic.*